Europäisches Patentamt

European Patent Office

Office européen des brevets

(19)

(11) **EP 1 028 394 A1**

(12) **DEMANDE DE BREVET EUROPEEN**

(43) Date de publication:
**16.08.2000 Bulletin 2000/33**

(51) Int Cl.⁷: **G06T 15/70**

(21) Numéro de dépôt: **99400342.4**

(22) Date de dépôt: **12.02.1999**

| | |
|---|---|
| (84) Etats contractants désignés:<br>**AT BE CH CY DE DK ES FI FR GB GR IE IT LI LU MC NL PT SE**<br>Etats d'extension désignés:<br>**AL LT LV MK RO SI** | (72) Inventeurs:<br>• **Villard, André**<br>  **75014 Paris (FR)**<br>• **Lange, Hervé**<br>  **75020 Paris (FR)** |
| (71) Demandeur: **Duran**<br>**92130 Issy Les Moulineaux (FR)** | (74) Mandataire: **Moutard, Pascal Jean et al**<br>**Cabinet Beau de Loménie**<br>**158, rue de l'Université**<br>**F-75340 Paris Cedex 07 (FR)** |

(54) **Procédé et dispositif d'animation d'images bidimensionnelles et tridimensionnelles**

(57) L'invention concerne un procédé d'animation d'une image comportant une chaîne de N segments i (i = 0, 1, 2, ...N-1) entre un segment dit pseudoracine 0 et un segment d'extrémité N-1, dit pseudofeuille , chacun des segments étant défini par une orientation dans l'espace $(\alpha, \beta, \psi)$, le segment pseudofeuille devant atteindre une orientation angulaire but $(\alpha_{but}, \beta_{but}, \psi_{but})$, ce procédé comportant les étapes suivantes:

- la définition d'une fonction de champ, dite champ d'image, comportant :

  • une composante attractive associée à l'orientation angulaire but et s'annulant pour cette orientation

  • et, si des contraintes angulaires sont à respecter, une composante répulsive associée à chacune de ces contraintes

- la détermination du mouvement de chaque segment selon une équation du mouvement, en fonction du champ pour l'orientation initiale de ce segment

- l'animation de la chaîne de segments selon le mouvement ainsi déterminé.

Le procédé peut être mis en oeuvre en utilisant des transformations géométriques, ou bien encore des quaternions.

FIG.3

EP 1 028 394 A1

**Description**

<u>Domaine technique ; art antérieur</u>

L'invention concerne, d'une manière générale, la génération de formes animées, bidimensionnelles ou tridimensionnelles.

Si l'on sait actuellement générer des formes, en particulier tridimensionnelles, leur animation en temps réel représente toujours un problème technique qui n'est pas résolu.

Or, divers domaines d'activité, tels que ceux des jeux vidéo ou de la réalisation cinématographique, ont besoin d'outils permettant simultanément de générer des formes, notamment en trois dimensions, mais aussi de les animer et/ou de les modifier, et ceci en temps réel. De même ,dans le domaine de la conception assistée par ordinateur de pièces techniques, il est important de pouvoir non seulement représenter lesdites pièces mais, aussi de pouvoir observer leur comportement lors de déformations simulées.

Actuellement, il existe un gros décalage entre la demande pouvant s'exprimer dans ces domaines, et les solutions apportées.

De plus, des approches "temps réel" existent actuellement, mais elles nécessitent la mise en oeuvre de gros ordinateurs.

Les procédés connus, dans ce domaine, consistent d'abord à générer des formes tridimensionnelles, de manière classique, puis à "ajouter" le mouvement, de la même manière que l'on crée un dessin animé. Ces procédés connus présentent de faibles capacités d'animation. Or, dans un domaine comme celui du jeu vidéo, les capacités d'animation et la prise en compte du mouvement sont essentielles, beaucoup plus que le réalisme de la forme inanimée elle-même.

Par ailleurs, il existe des logiciels qui permettent d'approximer une image réelle par un squelette. De tels logiciels ont une structure en "arbre". Ils ne sont pas applicables à des transformations en temps réel ou à des domaines interactifs.

Selon un autre aspect, se pose actuellement le problème de disposer de modèles tridimensionnels dont les données puissent être envoyées par le réseau Internet, en incluant des données sur l'animation de ces modèles, ainsi que, éventuellement, des données audio.

Internet met en oeuvre, en particulier, l'utilisation de liaisons téléphoniques dont le débit est faible. Un tel véhicule de l'information ne peut donc transmettre des données décrivant des formes, en particulier des formes en mouvement, qui sont définies, de manière classique, par un nombre important de points. Il se pose donc le problème de générer des objets tridimensionnels selon un codage suffisamment optimisé pour permettre le transfert et le contrôle des informations via Internet, y compris les informations portant sur le mouvement de l'objet concerné.

Un des autres problèmes techniques qui se pose est, indépendamment du problème de transmission via Internet, le problème du stockage des objets sous forme de données efficaces et très légères, en temps réel, et peu coûteuses en mémoire

L'invention concerne également le domaine de la cinématique inverse.

Cette technique trouve une application dans l'animation de modèles 3D.

Gérer un univers 3D et animer, en temps réel, par exemple des personnages 3D, n'est pas qu'une affaire de calculs géométriques et d'affichages rapides de textures. Permettre à des êtres virtuels d'être "vivants" et entièrement animables en temps réel nécessite des calculs algorithmiques complexes tels que la cinématique inverse.

La cinématique inverse permet de calculer, par exemple, le mouvement d'un objet à partir du "but" du mouvement.

Plus précisément, la cinématique inverse est une méthode de gestion de structures hiérarchisées, dans laquelle l'utilisateur détermine les positions des objets à l'extrémité de l'arborescence hiérarchique. La position et l'orientation de tous les autres objets de l'arborescence sont ensuite déterminées.

Lors de la hiérarchisation d'un squelette, on commence par placer les objets les plus hauts placés dans la hiérarchie (les "parents"), pour ensuite descendre dans la hiérarchie et positionner chaque "enfant". La cinématique inverse est une méthode de contrôle fondée sur la cible : on place un "enfant" et on calcule ensuite la position et l'orientation des "parents".

Il existe déjà des techniques de calcul, du type cinématique inverse (par exemple : méthode du Jacobien), mais qui pratiquement ne fonctionnent pas en temps réel, sauf à utiliser des ordinateurs très puissants. Un aspect de l'invention est donc d'apporter une contribution à ces procédés de cinématique inverse, dans la mesure où elle est compatible avec une utilisation "temps réel". La cinématique inverse selon l'invention permet également de modéliser des collisions.

Selon un autre aspect, en animation "traditionnelle", il est nécessaire de créer des clés d'animation pour tous les points-clé des objets (par exemple, pour le bras d'un personnage : l'épaule, l'avant-bras, le bras, la main...). On génère alors les autres positions intermédiaires du personnage par interpolation. Ceci oblige l'animateur à créer manuellement toutes ces clés.

De plus, chaque clé d'animation est alors stockée sous forme d'un modèle 3D complet de l'objet ou du personnage, tous ces modèles devant être stockés, compressés et calculés. Ainsi, 10 animations avec 10 clés chacune nécessitent de créer et stocker 100 modèles 3D différents du même objet, ce qui représente des données très lourdes, surtout si l'on veut transférer les modèles sur Internet. Même avec la technologie des NURBS, cela représente 500 Kb de données.

Il se pose donc le problème de trouver une technique de type "cinématique inverse", compatible en temps réel.

Il se pose donc, également, le problème de trouver une technique de type "cinématique inverse" économique en termes de place mémoire.

Exposé de l'invention

L'invention a tout d'abord pour objet un procédé d'animation d'une image comportant une chaîne de segments, entre un segment dit pseudo racine et un segment d'extrémité dit pseudofeuille , chacun des segments étant défini par une orientation dans l'espace ($\alpha$, $\beta$, $\psi$), le segment pseudofeuille devant atteindre une orientation angulaire but (abat, $\beta_{but}$, $\psi_{but}$), ce procédé comportant les étapes suivantes :

- la définition d'une fonction de champ, dite champ d'image, comportant :

  • une composante attractive associée à l'orientation angulaire but et s'annulant pour cette orientation
  • et, si des contraintes angulaires sont à respecter, une composante répulsive associée à chacune de ces contraintes

- la détermination du mouvement de chaque segment selon une équation du mouvement, en fonction du champ pour l'orientation initiale de ce segment
- l'animation de la chaîne de segments selon le mouvement ainsi déterminé.

Selon l'invention, une valeur de champ d'image peut être associée à tout segment d'une forme ou d'un squelette à animer, représenté sur l'image, et ceci pour tout instant n (le temps étant discrétisé). Le champ est une fonction vectorielle $\vec{E}$ définie pour tout segment de la forme ou d'une partie de la forme, et toute orientation du segment. Tout segment faisant partie de cette forme peut être par exemple repéré dans un système de coordonnées angulaires par trois angles ($\alpha$, $\beta$, $\psi$). Selon l'invention sont ajoutées, à ces coordonnées angulaires, des coordonnées ou paramètres "d'influence" qui correspondent en fait à la valeur du champ d'image au segment considéré ayant une orientation définie, à l'instant n considéré. Par conséquent, avec ces coordonnées supplémentaires, il est possible de décrire les influences que chaque segment de la forme subit, et de déterminer le mouvement approprié pour que la pseudofeuille puisse atteindre son but.

Selon un second mode de réalisation, on peut en outre ajouter, à ces coordonnées de champ ou de potentiel, des coordonnées dynamiques $k_i$ et $k_a$ , appelées respectivement paramètre "d'inertie " et paramètre de "souplesse". La souplesse (donc le coefficient $k_a$) traduit que le fait que l'objet, au point considéré, s'amortit plus ou moins selon qu'il est plus ou moins influencé par les autres points, ou les autres parties de l'objet. L'inertie correspond à la notion d'inertie (paramètre mathématique) en dynamique classique.

Selon l'invention, la description du mouvement est donc contenue dans la définition de ces coordonnées dynamiques supplémentaires. La description du mouvement est donc économique en termes de place mémoire dans un dispositif de calcul à l'aide duquel le procédé selon l'invention est mis en oeuvre.

Le procédé selon l'invention permet une modification immédiate des coordonnées dynamiques que constituent $E_n$ (la valeur du champ pour un segment particulier) ou son potentiel et/ou $k_a$ et/ou $k_i$ (coefficients d'amortissement et d'inertie). Il permet donc une forte interactivité.

L'invention concerne également un procédé d'animation d'une image comportant une chaîne de N segments i (i = 0, 1, 2,...,N-1 ) entre un segment pseudo racine 0 et un segment d'extrémité N-1, dit pseudofeuille, chaque segment i étant repéré, par rapport au segment i-1, encore appelé segment père du segment i, par une transformation géométrique $dTRF_{(i)} = dTRF0_{(i)},^* \delta TRF_{(i)}$ composé d'une transformation de repos $dTRF0_{(i)}$ et d'une transformation $\delta TRF_{(i)}$ traduisant le mouvement, chacune de ces transformations comportant une composante rotationelle associée $dROT_{(i)}$ , $dROT0_{(i)}$ et $\delta ROT_{(i)}$ ce procédé comportant les étapes suivantes :

1. déterminer un but à atteindre pour la pseudofeuille
2. sélectionner la pseudofeuille en tant que segment courant
3. calculer, pour le segment courant, la rotation $\delta ROTB_{(i)}$ pour atteindre le but fixé à ce segment
4. déterminer, pour le segment père du segment courant, le but à atteindre

5. sélectionner le segment père du segment courant en tant que segment courant et réitérer l'étape 3

6. déplacer la chaîne de segments en fonction des rotations ainsi déterminées.

Chaque but à atteindre peut être déterminé par 3 angles $\alpha_{but}$, $\beta_{but}$ et $\psi_{but}$.

Selon ce procédé, chaque segment, ou bone, travaille comme s'il était isolé des autres mais apporte sa contribution à ce que la pseudofeuille atteigne son but. L'action effectuée par un bone dépend de l'action effectuée par les autres bones : si un bone tend vers un attracteur, cela modifie l'attracteur des bones parents, et donc modifie l'action de ceux-ci, bien qu'ils possèdent exactement le même mécanisme.

Dans cette logique, qui part de "la pseudofeuille" et remonte à la pseudo racine, le but du segment père dépend du but du segment fils.

L'invention a également pour objet un procédé de déplacement et/ou d'animation d'un système articulé visualisé sur une image, ce système comportant N segments i (i = 0, 1, 2,...,N-1 ) entre un segment racine i=0 et un segment d'extrémité i=N-1, dit pseudofeuille , et les segments étant reliés deux à deux entre eux par des articulations , une orientation but de la pseudofeuille étant déterminée , chaque segment i étant repéré, par rapport au segment i-1, encore appelé segment père, par un quaternion $dQ_i$, et ,par rapport à un repère absolu, par un quaternion $Q_i$, l'orientation but à atteindre étant elle même représentée, dans le repère absolu, par un quaternion $Q_B$, ce procédé comportant les étapes suivantes:

- pour chaque segment i, définir un quaternion champ, dit champ d'image, comportant :

  • une composante attractive, associée à l'orientation but
  • et, si contraintes sont imposées, une composante répulsive associée à chacune des contraintes

- pour chaque segment i, calculer le quaternion vitesse
- déplacer chaque segment du système articulé, sur l'image, en fonction de la vitesse ainsi obtenue.

L'utilisation de quaternions permet de résoudre des problèmes de discontinuités dans les angles, c'est-à-dire des problèmes de sauts brusques au cours du mouvement, qui peuvent apparaître lors de l'utilisation du mode de réalisation précédent.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1 représente un point objet et un point but, dans un plan
- la figure 2 représente un point objet, un point but et un obstacle, dans un plan
- la figure 3 représente un squelette à animer, sur un écran
- la figure 4 représente l'évolution de la composante d'un champ selon une variable angulaire
- la figure 5 représente le mouvement relatif de deux segments, ou bones, d'une chaîne articulée à animer
- les figures 6A et 6B représentent schématiquement deux modes de réalisation du déroulement d'un procédé selon l'invention
- la figure 7 illustre le problème des discontinuités angulaires
- les figures 8 et 9 représentent schématiquement la position relative de deux segments, ou bones, d'un squelette à animer
- les figures 10 à 16 représentent des algorithmes de cinématique inverse , avec utilisation des quaternions
- les figures 17A et 17B représentent schématiquement la structure d'un dispositif pour mettre en oeuvre un procédé selon l'invention.

Description détaillée de modes de réalisation de l'invention

L'invention sera sans doute mieux comprise après une présentation d'un modèle mis au point par les inventeurs pour l'animation des points d'une image en représentation bidimensionnelle (2D) ou tridimensionnelle.

Un premier exemple concerne une représentation bidimensionnelle (2D).

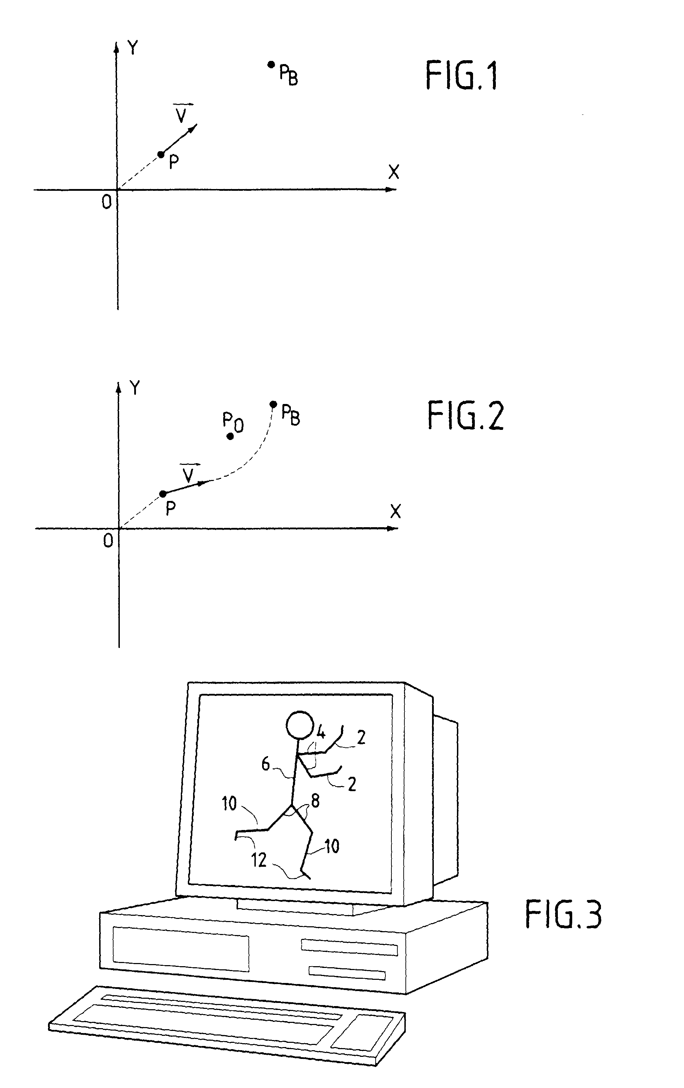

Comme illustré sur la figure 1, on se place dans un plan de repère (O,X,Y).

Un objet ou un personnage (ou un point ou un pixel) P, encore appelé "animate" ou point objet, de coordonnées (x,y) est placé initialement à l'origine O et doit se déplacer vers un but $P_B$ de coordonnées $(x_B, y_B)$

Le but engendre un champ attractif, et propage ainsi son influence dans tout l'espace selon une certaine loi.

Un tel champ E (vecteur) peut dériver d'un potentiel V (scalaire) selon la formule $E(P) = -\nabla(P)$ où $\nabla$ désigne l'opérateur «Gradient ». Cela veut dire que les composantes $E_x, E_y$.. du vecteur E(P) sont données par les relations

$$E_x = -(\partial V/\partial x),\ E_y = -(\partial V/\partial_y)...$$

Le potentiel produit par le but est, par exemple, de la forme $V_B(P) = k.\|PP_B\|^2$., avec k différent de zéro. Un tel potentiel, fonction croissante de la distance $\|PP_B\|$, traduit le fait que l'influence du but est d'autant plus grande que le point objet en est éloigné.

En termes de champ, on a alors (en 2D):

$$Ex = -(\partial V_B/\partial_x) = -2.k.(x- x_B)\ \text{et}\ E_y = -(\partial V_B/\partial_y) = -2.k.(y- y_B)$$

Les lignes de champ générées par le but $P_B$ constituent alors un faisceau de droites passant par $P_B$. Le champ est, dans cet exemple, radial et orienté vers $P_B$ Son intensité est nulle en $P_B$ et croît avec la distance.

Le champ E est par exemple proportionnel à la vitesse (dP/dt) du point ou de l'objet. Dans ces conditions, la vitesse du point est obtenue, dans le cas de potentiel ci-dessus, par les équations:

$$(dx/dt)= -\lambda.(x-x_B),\ \text{et}\ (dy/dt)= -\lambda.(y-y_B) \qquad (1)$$

Si le champ s'annule, la vitesse s'annule aussi, et donc le personnage s'arrête (il n'a pas d'inertie). Pour cela on prend pour un but $P_B$ à atteindre une fonction champ qui s'annule en $P_B$. Ceci est par exemple réalisé si la fonction potentiel admet un extremum (est minimale ou maximale) en $P_B$.

L'intégration des équations précédentes donne :

$$x(t) = x_B + B.\exp(-\lambda.t)\ \text{et}\ y(t) =y_B + B'.\exp(-\lambda.t)$$

où B et B' sont des constantes d'intégration.

Ainsi, le point atteint son but attracteur. Sa vitesse est d'abord grande (elle est égale au vecteur de composantes $[\lambda x_B, \lambda y_B]$ au départ de l'origine) puis décroît progressivement jusqu'à tendre vers la valeur 0.

On peut, selon une variante, proposer que les équations précédentes ne donnent pas la vitesse mais la direction du point, le module de la vitesse étant constant (ou en tout cas contrôlable).

Soit, maintenant, $\delta$ le module de la vitesse : il exprime le déplacement élémentaire que l'on veut imposer au point objet. Pour que la norme de la vitesse soit imposée égale à $\delta$, on a les équations suivantes du mouvement, qui se généralisent aussi aisément à 3 dimensions:

$$(dx/dt) = (\delta/\|E\|).E_x\ \text{et}\ (dy/dt) = (\delta/\|E\|).E_y \qquad (2)$$

Selon un mode particulier de réalisation, on peut, dans certains cas, considérer que le mouvement d'un point P ne peut se faire que selon des directions « quantifiées », c'est-à-dire 'à gauche', ou 'à droite', ou 'en haut' ou 'en 'bas'. Le mouvement a l'air continu si on l'observe « de loin » comme c'est le cas si le point P représente un pixel d'un écran. Dans ces conditions, un algorithme de mouvement n'a besoin de regarder que le signe des quantités (dx/dt) et (dy/dt), c'est-à-dire le signe des quantités $E_x$ et $E_y$ . Par exemple si $E_x > 0$ et $E_y > 0$, il faut déplacer le pixel 'à droite' et en 'bas'. Ainsi, tant que le but n'est pas atteint, on examine le signe des quantités $E_x$ et $E_y$ et le pixel est déplacé en conséquence.

On va maintenant décrire le cas où il existe un obstacle centré en $P_o$ (de coordonnées $(x_0, y_0)$, le point P devant se rendre au but en contournant ou en évitant l'obstacle (figure 2).

Un tel obstacle $P_o$ est générateur d'un champ répulsif dont l'influence décroît en fonction de la distance et est, par exemple, plus importante localement, au voisinage de l'obstacle. Il peut notamment exister une distance d'influence ou une zone d'influence, autour de l'obstacle, au-delà de laquelle le champ répulsif de l'obstacle est nul. C'est, par exemple, un champ de potentiel :

$$V_o(P) = k'.\|PP_o\|^{-1} \text{ si } \|PP_o\| < d_i \text{ (barrière d'influence à distance di de } P_o) \tag{3}$$

et $V_o(P) = k'.d_i^{-1}$ (une constante) ailleurs.

Une telle fonction n'est pas discontinue au niveau de la barrière d'influence (cela donnerait un champ infini en cet endroit). Cependant, le gradient ( le champ) donne une discontinuité, et ceci peut produire un effet de répulsion brutal sur l'animate, ou le point, au moment de la traversée de la barrière d'influence.

Une telle fonction $V_o(P)$ prend une valeur infinie pour $PP_o = 0$. Mais, s'agissant d'un obstacle, ce dernier est en principe évité et jamais atteint.

Dans la zone d'influence le gradient de la fonction $V_o(P) = k'.\|PPo.\|^{-1}$ donne un champ $E_o(P) = + k'.PP_o.$ $\|PP_o\|^{-2}$ (le signe + donne un champ répulsif : k' doit être >0 pour que le champ soit répulsif). En résumé, le champ produit par l'obstacle $P_o$ est :

-   pour $O < \|PP_o\| < d_i$, $E_o = k'.PPo.\|PP_o\|^{-2}$
-   pour $d_i < \|PPo\|, E_o = 0$.

Le champ total E auquel est soumis le personnage ou le point est la somme des divers champs (principe d'additivité des champs) :

$$E = E_B + E_o.$$

D'où:

$$(dx/dt) = (\delta/\|(E_B + E_o)\|).(E_B + E_o)_x$$
$$(dy/dt) = (\delta/\|(E_B + E_o)\|).(E_B + E_o)_Y \tag{4}$$
$$(dz/dt) = (\delta/\|(E_B + E_o)\|).(E_B + E_o)_Z$$

On peut donc traiter le cas le plus général du point P cherchant à atteindre un but $P_B$ (générateur d'un potentiel $V_B(P) = k.\|PP_B\|^2$) dans un univers (2D par exemple) contenant un obstacle $P_o$. L'influence de l'obstacle (générateur d'un potentiel $V_o(P) = k'.\|PP_B\|^{-1}$) se traduit par les équations (5) :

$$(dx/dt) = (\delta/\|(E_B + E_o)\|).[-k.(x - x_B) + k'. (x - x_O). \|PP_O\|^{-2}] \tag{5}$$

$$(dy/dt) - (\delta/\|(E_B + E_o)\|).[-k.(y - y_B) + k'. (y - y_o) \|PP_o\|^{-2}]$$

Pour une étude qualitative, on considère seulement les signes de ces quantités :

$$Sgn(dx/dt) = S_{gn}[ -k.(x - x_B) + k' (x - x_0).\|PP_o\|^{-2}]$$
$$Sgn(dy/dt) = S_{gn}[ -k.(y - y_B) + k' (y - y_0) \|PP_o\|^{-2}] \tag{6}$$

Du fait de la discontinuité du champ au voisinage de la barrière d'influence de l'obstacle, le point mobile P peut y subir un effet brutal de changement de trajectoire. Il y a alors comme la « surprise » de rencontrer un obstacle non prévu. Ceci se comprend puisque la notion d'action à distance, propre à la notion de champ, est précisément supprimée au-delà de la barrière d'influence, par définition même de cette barrière.

La discontinuité du champ peut s'exprimer comme un vecteur ΔE de composantes :

$$\Delta E_x = (x_d - x_o).d_i^{-2} \text{ et } \Delta Ey = (y_d - y_o)^{-2} d_i^{-2} \tag{7}$$

où $x_d$ et $y_d$ sont les composantes du point P situé à la distance $d_i$ de $P_o$ (à la barrière d'influence).

Si l'amplitude des composantes $\Delta E_x$ et $\Delta E_y$ est telle que Sgn(dx/dt) et Sgn(dy/dt) changent, on est en présence d'une sorte de « choc » (mais il n'y a pas de contact), avec changement de direction. L'entrée dans la zone d'influence provoque une déviation de la trajectoire.

Dans le cas de plusieurs (N) obstacles $P_{O1}$, $P_{O2}$... ,$P_{ON}$ une généralisation conduit aux formules suivantes (où la valeur $k'_j$ est nulle en dehors de la zone d'influence de l'obstacle $P_{oj}$):

$$(dx/dt) = N.\{-k.(x - x_B) + \sum_{(j=1,N)} [k'_j. (x - x_{oj}) \|PP_{oj}\|^{-2} ]\}$$

$$(dy/dt) = N.\{-k.(y - y_B) + \sum_{(j=1,N)} [k'_j. (y - y_{oj}) \|PP_{oj}\|^{-2} ]\} \qquad (8)$$

$$(dz/dt) = N.\{-k.(z - z_B) + \sum_{(j=1,N)} [k'_j. (z - z_{oj}). \|PP_{oj}\|^{-2} ]\}$$

avec $N = (\delta/\|(E_B + \sum_{(j=1,N)} (E_{oj}))\|)$

où $E_{oj}$ désigne le champ associé à l'obstacle $P_{oj}$.

Selon le modèle explicité ci-dessus, l'influence de l'inertie d'un animate ou d'un point est négligée. La trajectoire correspondante est calculée en considérant que le champ total E auquel est soumis le point est directement proportionnel à la direction de sa vitesse v. Mathématiquement le vecteur vitesse v est, dans ce cas, donné par la formule

$$v = (\delta/\|E\|)E,$$

le coefficient $(\delta/\|E\|)$ étant destiné à produire un déplacement élémentaire égal à $\delta$.

L'algorithme de calcul de $P_{n+1}$ en fonction de $P_n$ ( qu'on appelle aussi l'Actionneur de l'animate) est donc le suivant ($P_n$ désigne la position actuelle et $P_{n+1}$ la position suivante):

$$P_{n+1} = P_n + (\delta/\|En\|)E_n \qquad (9)$$

où $E_n$ est le champ total en $P_n$

Selon un autre mode de réalisation on peut donner à l'animate une inertie variable, ou par exemple, une inertie constante « loin » d'un but à atteindre, et une inertie décroissante au fur et à mesure que ce but est approché. Ceci a un effet de « lissage » de la trajectoire lors de l'évitement d'obstacles (l'animate est entraîné par son inertie), et interdit un éventuel mouvement oscillatoire indéfini autour d'un but puisque l'inertie décroît, jusqu'à devenir très faible ou même nulle une fois le but atteint (ceci a le même effet qu'un « frottement » progressif).

A cette fin, un but $P_B$ présente une distance caractéristique $d_I$ à partir de laquelle l'inertie décroît.

Par ailleurs l'Actionneur de l'animate a alors la structure suivante :

$$1) \ V_{n+1} = k_a.v_n + E_n$$

$$2) \ P_{n+1} = P_n + (\delta/\|v_{n+1}\|).v_{n+1} \qquad (10)$$

Le coefficient $k_a$ , coefficient d'élasticité ou d'amortissement, dépend de la distance $\|P_nP_B\|$. Si $\|P_nP_B\| > d_I$, on peut prendre par exemple $k_a=1$. Lorsqu'on s'approche du but, $k_a$ décroît vers 0 pour que l'influence de l'inertie se fasse progressivement de moins en moins sentir. Le coefficient $k_a$ sert donc à, progressivement, diminuer l'inertie de l'animate lors de son approche du but à atteindre. Si $k_a$ est très faible le champ est pratiquement proportionnel à la vitesse, et si $k_a$ est très voisin de 1 le champ est pratiquement proportionnel à l'accélération. On peut vérifier que, si $k_a=0$, on est ramené au cas précédent où l'inertie est annihilée.

D'une manière générale, on prendra $0 < k_a < 1$. Les cas où $k_a = 0$ ou $k_a = 1$ ont été commentés ci-dessus.

Pour $k_a > 1$, le système diverge.

La loi de décroissance de $k_a$ en fonction de $\|P_nP_B\|$ est, par exemple, parabolique:

$$k_a = (\|P_nP_B\|/d_I).[2 - (\|P_nP_B\|/d_I)] \qquad (11)$$

Selon une variante, on introduit un coefficient supplémentaire (noté $k_l$ et par exemple compris entre 0 et 1), indépendant du but et tel que la vitesse de l'animate soit calculée selon la nouvelle formule (12) :

$$V_{n+1} = k_l.k_a v_n + E_n. \tag{12}$$

Ceci permet une plus grande souplesse dans le réglage de l'inertie de l'animate.

Dans le procédé selon l'invention, la représentation de l'univers dans lequel évolue un point ou un objet est faite en termes de champ. Par exemple si cet univers est constitué d'obstacles qu'il faut éviter, ces champ sont des champs répulsifs.

L'algorithme de déplacement d'un animate peut être donné par les règles suivantes.

A l'instant n l'animate est dans l'état $\psi_n$. Cet état est par exemple constitué par un ensemble de données cinématiques, à savoir la position $P_n$ de l'animate, sa vitesse $v_n$, et son déplacement élémentaire δ.

Une chaîne d'action (ou "actionneur") de l'animate, capable de produire, à l'instant n+I, son nouvel état $\psi_{n+1}$, en fonction des obstacles et du but à atteindre, présente par exemple la structure suivante:

1) Calculer le champ total $E_n$ (composante attractive et répulsive) au point $P_n$.
2) Calculer la nouvelle vitesse $v_{n+1} = k_a V_n + E_n$
   avec $k_a = (\|P_n P_B\|/d_l).[2 - (\|P_n P_B\|/d_l)]$ pour $\|P_n P_B\| < d_l$ et, par exemple $k_a = 1$ sinon.
3) Calculer la nouvelle position $P_{n+1} = P_n + (\delta/\|v_{n+1}\|).v_{n+1}$

Selon un mode de réalisation plus général, la vitesse de déplacement du point objet peut être calculée selon la formule :

$$V_{n+1} = k_a V_n + k_i E_n \ ,$$

où * et $V_{n+1}$ et $V_n$ représentent respectivement la vitesse aux instants n+1 et n

* $E_n$ représente la valeur du champ (avec ses composantes attractive(s) et/ou répulsives) au lieu de positionnement du point à l'instant n
* $k_a$ et $k_i$ sont, respectivement, des coefficients d'amortissement et d'inertie.

Le rôle de $k_a$ a déjà été expliqué ci-dessus. On prendra encore, en général, $0 < k_a < 1$, les valeurs $k_a = 0$ ou 1 étant également possibles. $k_a$ peut, ici aussi, être choisi comme dépendant de la distance, par exemple selon la formule (11) ci-dessus, avec les mêmes effets que ceux déjà expliqués.

Le coefficient $k_i$ ($\geq 0$ et, en général, compris entre 0 et 1) correspond à l'inertie (au sens mathématique du terme) de la physique classique.

Si $k_i$ est faible, l'inertie est grande (et inversement) et, si $k_a$ est faible, l'amortissement est grand (ou la "souplesse" est faible) et inversement.

On remarque que, si $k_a = 0$, l'effet de l'inertie est bien annihilé, quand bien même k, (coefficient mathématique) est différent de zéro.

On peut également introduire un autre coefficient $k_e$ selon la formule suivante :

$$V_{n+1} = k_e k_a V_n + k_i E_n$$

$k_a$ et $k_i$ ont la même signification que ci-dessus.

$k_e$ est un coefficient multiplicateur de $k_a$.

Le modèle exposé ci-dessus peut être transposé au problème de la transformation ou de l'animation de squelettes, en particulier tridimensionnels (3D), qui réalisent une approximation d'une image réelle.

A cette fin, une image, ou plutôt un squelette représentant schématiquement des objets ou des formes d'une image (comme par exemple la représentation, donnée en figure 3 d'un personnage) peut être considéré ou décrit comme un ensemble d'os, ou "bones",2, 4, 6, 8, 10, 12 articulés et reliés entre eux par des articulations.

Chaque bone $B_i$ a un père $B_{i-1}$, S'il n'a pas de père, le bone $B_i$ est la racine et a le numéro i= 0;

La chaîne de bones est décrite comme une suite de transformations géométriques relatives dTRF(i). Le préfixe d veut dire "différence", et $dTRF_{(i)}$ est la transformation du bone $B_i$ relativement au repère du bone père (i-1 ).

Dans le cas de $B_o$, $dTRF_{(0)}$ est la transformation du bone $B_0$ dans un repère "absolu" quelconque. Dans un tel repère chaque bone $B_i$ a une transformation $TRF_{(i)} = TRF_{(i-1)} * dTRF_{(i)}$ avec $TRF_{(-1)} = I$ (Identité).

On considère tout d'abord une chaîne cinématique, c'est-à-dire une suite de "bones" reliés par des articulations. On appelle le "bone" extrémité pseudofeuille.

Dans l'espace, une orientation peut être définie par 3 angles $\alpha$, $\beta$ et $\psi$. $\alpha$ et $\beta$ sont les coordonnées sphériques de l'axe de rotation, et $\psi$ est l'angle de rotation autour de cet axe. Le bone pseudofeuille cherche à atteindre une orientation "but" définie elle aussi par 3 angles $\alpha_{but}$, $\beta_{but}$, et $\psi_{but}$.

Un ensemble de 3 angles constitue un vecteur qui définit un point angulaire $Pa = (\alpha, \beta, \psi)$.

Par exemple, la pseudofeuille est un point angulaire $P_a = (\alpha, \beta, \psi)$ qui doit atteindre un autre point angulaire $P_{abut} = (\alpha_{but}, \beta_{but}, \psi_{but})$. Ce point angulaire-but génère un champ attracteur **E** dans l'espace des points angulaires. Le champ est une fonction vectorielle $\mathbf{E}(\alpha, \beta, \psi)$ définie en tout point angulaire $P_a = (\alpha, \beta, \psi)$, ou encore pour toute direction définie par trois angles $\alpha$, $\beta$, $\psi$. $P_a$ va se déplacer dans cet espace des points angulaires sous l'effet de ce champ.

De plus, un bone ne peut pas toujours prendre n'importe quelle orientation : il peut en effet y avoir des contraintes. Ces contraintes peuvent être matérialisées par un (ou plusieurs) point(s) angulaire(s) $P_{aback}$, créant en tout point de l'espace un champ répulsif **E'**.

En transposant les équations déjà données ci-dessus, on obtient l'algorithme suivant :

$$\mathbf{V_n} = K_a \, \mathbf{V_{n-1}} + K_i \, (\mathbf{E_n} + \mathbf{E'_n}) \qquad (13\text{-}1)$$

$$\mathbf{P_{an}} = \mathbf{P_{a(n-1)}} + \mathbf{V_n} \qquad (13\text{-}2)$$

où :

- . n est un entier qui représente le temps (discrétisé). $\mathbf{Pa_n}$ est la position angulaire à une certaine époque, et $\mathbf{Pa_{(n-1)}}$ est la position angulaire à "l'époque précédente".
- . $V_n$ est le vecteur "vitesse" du point angulaire
- . **E** est le vecteur champ attracteur de composantes :
  $E[K (\alpha_{but} - \alpha_{(n-1)}), K (\beta_{but} - \beta_{(n-1)}), K (\psi_{but} - \psi_{(n-1)})]$,
  K étant le coefficient attracteur (par exemple $\leq 10^{-1}$ qui est une valeur déjà importante)
- . **E'** est le champ répulsif. Ce champ est lié, par exemple, au fait que chaque grandeur $\alpha$, $\beta$ et $\psi$ ne peut varier que dans certaines limites : $\alpha \in [\alpha_{min}, \alpha_{max}]$, $\beta \in [\beta_{min}, \beta_{max}]$ et $\psi \in [\psi_{min}, \psi_{max}]$. Or, l'une ou l'autre de ces grandeurs peut atteindre une valeur limite.

Par exemple, $\psi$ est dit "proche" de $\psi_{min}$ si $\psi < \psi_{Min} + r.( \psi_{max} - \psi_{min})$, r étant un coefficient de proximité (qui peut par exemple être égal à 1/10, ou, typiquement, être compris entre 0 et 1). Il existe alors, pour la composante $\psi$ de la particule, un champ répulsif $E'_\psi$ selon $\psi$ dont la valeur (positive) est:

$$E'_\psi = -K'.[ \psi - (\psi_{Min} + r.( \psi_{max} - \psi_{min}))]$$

où K' est un coefficient "répulseur" (une valeur de quelques unités est déjà importante).

Inversement, $\psi$ est "proche" de $\psi_{max}$ si $\psi > \psi_{max} - r.( \psi_{max} - \psi_{Min})$. On compense alors cette tendance par l'application, selon $\psi$, d'un champ répulsif $E'_\psi$ dont la valeur (négative) est :

$$E'_\psi = -K'.[\psi - (\psi_{max} - r.(\psi_{max} - \psi_{Min}))]$$

- . $K_i$ est le coefficient angulaire d'inertie du bone influencé par les champs E et E'. Une valeur faible de $K_i$ donne une forte inertie (un champ fort a moins d'influence sur un objet de forte inertie), et inversement.

Si $k_i$ est égal à 0, il ne peut y avoir de déplacement.

Si $k_i$ est voisin de 0, il faut beaucoup de temps pour qu'un bone se déplace d'une position à l'autre (c'est la difficulté de déplacer un corps de forte inertie).

$k_i = 1$ donne une faible inertie, mais cela dépend également de l'intensité du vecteur E + E', qui est un paramètre réglable.

En général, on prend $0 < k_i < 1$

. $K_a$ est le coefficient d'amortissement angulaire du bone influencé par les champs E et E'.

Si $K_a = 0$ il y a amortissement maximum, c'est-à-dire que $v_n = 0$ si $(E + E') = 0$; ou, en d'autres termes, la particule s'arrête si le champ total qui lui est appliqué est nul.

Une valeur de $K_a$ égale à environ 0.5 fait amortir rapidement le processus.

Si $K_a = 1$, la somme $(E + E')$ est égale à l'accélération $v_n - v_{(n-1)}$ et la particule ne s'arrête pas si le champ total qui lui est appliqué est nul ; dans ce cas l'amortissement est minimum. La valeur de $K_a = 1$ entraîne une oscillation du point autour de son but, sans qu'elle ne l'atteigne jamais.

Si on choisit $K_a > 1$, le point, non seulement n'atteint jamais son but, mais s'en éloigne irrémédiablement. (En fait ceci n'est vrai qu'avec une très forte "probabilité").

Le coefficient $K_a$ est une caractéristique intrinsèque du bone soumis à l'influence du champ (de même que $K_i$). De préférence, on prend $0 \le K_a < 1$.

Pour une certaine "sûreté" de fonctionnement, par exemple dans le cas d'oscillations importantes, on peut, tout en continuant de calculer la vitesse $v_n$ par l'équation (13-1), modifier légèrement l'équation (13-2) en introduisant une vitesse limite $v_{lim}$ que la particule de position "angulaire" $Pa_n$ ne doit jamais dépasser, ou une vitesse angulaire que le bone ne peut pas dépasser.

Pour cela, on calcule la "norme" de la vitesse :

$$\|V_n\| = |v_{\alpha n}| + |v_{\beta n}| + |v_{\psi n}|$$

Si $\|v_n\| < v_{lim}$ on laisse l'équation (13-2) inchangée.

Sinon, on modifie ainsi l'équation 13-2 (qui devient équation 13-2') de la manière suivante :

$$Pa_n = Pa_{(n-1)} + V_{n.} \ V_{lim/}\|v_n\| \tag{13-2'}$$

Les propriétés inertielles sont conservées, car la vitesse $V_n$ est calculée toujours de la même façon ; mais, la particule "absorbe" les grandes fluctuations de vitesse, sauf si le système prend trop de temps à s'amortir.

Cette limitation de la vitesse joue aussi un rôle dans le cas de tentative de dépassement de valeurs limites par le système. Les valeurs angulaires limites ne sont pas, en effet, des "seuils" stricts. Ces valeurs limites peuvent être dépassées, en particulier si le système est réglé avec une forte inertie. Dans la pratique, cela ne se produit pas si la précaution est prise de limiter artificiellement la "vitesse" de la particule de la même manière que décrit ci-dessus dans le cas d'oscillations importantes.

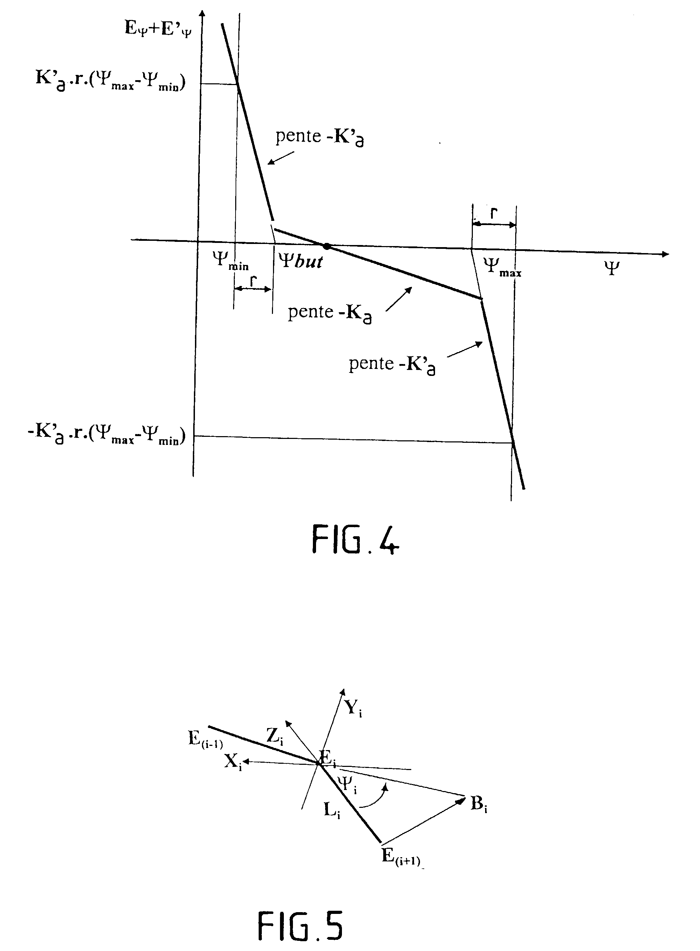

Pour illustrer l'influence du champ total sur la particule, on peut représenter graphiquement (Figure 4) l'équation 13-1 sur une seule composante (par exemple $\psi$). La projection sur l'axe $\psi$ de l'équation 13-1 donne :

$$V_{\psi n} = K_a.V_{\psi(n-1)} + K_i.K(\psi_{but} - \psi_{(n-1)}) + K_i.E'_\psi, \text{ avec :}$$

- $E'_\psi = E'_{\psi 1} = -K'.[\ \psi - (\psi_{min} + r.(\ \psi_{max} - \psi_{min})\ )]$, si $\psi < \psi_{min} + r.(\psi_{max} - \psi_{min})$, et :
- $E'_\psi = E'_{\psi 2} = -K'.[\ \psi - (\psi_{max} - r.\ (\psi_{max} - \psi_{min})\ )]$, Si $\psi > \psi_{max} - r.(\psi_{max} - \psi_{min})$.

Dans le cas où $K_a = 0$, le champ $E_\psi + E'_\psi$ représente la variation $v_{\psi n}$ qu'il faut donner à $\psi$. Le graphe montre que, si $\psi > \psi_{but}$, cette variation est négative, ce qui tend à diminuer la différence $(\psi - \psi_{but})$. Inversement si $\psi < \psi_{but}$ cette variation est positive, ce qui tend à diminuer la différence $(\psi_{but} - \psi)$. Le but est donc bien un point de convergence.

Du point de vue des transformations géométriques on peut dire que, dans un état initial, une chaîne de bones est une suite de transformations relatives qui sont fixées par construction. Soient $dTRF0_{(i)}$ ces transformations "de repos". Lorsque la chaîne se meut, chaque transformation $dTRF_{(i)}$ subit une variation $\delta TRF_{(i)}$ autour de $dTRF0_{(i)}$ selon la loi :

$$dTRF_{(i)} = dTRF0_{(i)}*\delta TRF_{(i)}.$$

Ainsi, c'est la suite des variations $\delta TRF$ qui va produire le mouvement vers l'orientation souhaitée de la pseudofeuille.

Pour une description complète de la chaîne cinématique on peut préciser, pour chaque bone (i), quelles sont les contraintes sur $\delta ROT_{(i)}$ :

- tout d'abord, on indique quel est l'axe initial de rotation de $\delta ROT_{(i)}$. Sont donc associés à chaque $\delta ROT_{(i)}$ deux angles $\alpha_0$ et $\beta_0$ qui indiquent la position de cet axe initial. En fait l'angle $\psi_0$ initial de rotation autour de cet axe est toujours nul, parce que la variation initiale de rotation $\delta ROT0_{(i)}$ donne la matrice identité.
- ensuite, les contraintes sont indiquées par deux "vecteurs angulaires" $Ca_{min}$ ($\alpha_{min}$, $\beta_{min}$, $\psi_{min}$) et $Ca_{max}$($\alpha_{max}$, $\beta_{max}$, $\psi_{max}$) qui donnent les valeurs limites autorisées des 3 angles $\alpha$, $\beta$ et $\psi$.

Par exemple, si $\alpha_{min} = \alpha_0 = \alpha_{max}$ et $\beta_{min} = \beta_0 = \beta_{max}$ la contrainte maximale est sur la position de l'axe de rotation, puisqu'il lui est interdit de bouger. Si, par exemple, $\psi_{min} = \psi_0$ et $\psi_{max} = \psi_0 + 90°$, cela veut dire que le bone ne peut tourner autour de son axe fixe que d'un angle $\psi$ compris entre sa valeur initiale $\psi_0$ et la valeur $\psi_0 + 90°$.

La convergence d'un bone isolé vers un attracteur peut maintenant être décrite de la manière suivante.

On suppose qu'on isole un bone i de la chaîne (donc on les traite indépendamment les uns des autres), ce bone devant atteindre une orientation $ROTB_{(i)}$.

L'algorithme qui permet d'y arriver est le suivant ($ROT_i$ désigne la rotation associée au bone i, dans un repère absolu) :

1- Calculer $dROTB_{(i)}$ à atteindre par la formule :

$$dROTB_{(i)} = ROT^{-1}{}_{(i-1)}{}^*ROTB_{(i)} \; ;$$

ou:

$$dROTB_{(i)} = ROTB_{(i)} \text{ si } i = 0$$

2- Calculer $\delta ROTB_{(i)}$ à atteindre par la formule :

$$\delta ROTB_{(i)} = dROT0^{-1}{}_{(i)}{}^*dROTB_{(i)}$$

3- A partir de $\delta ROTB_{(i)}$, calculer les 3 angles $\alpha_B$, $\beta_B$ et $\psi_B$ à atteindre (équations 13-1 et 13-2 ci-dessus).
4- A partir de la théorie des champs précédemment décrite, calculer les 3 angles $\alpha_n$, $\beta_n$ et $\psi_n$ effectivement atteints (par les formules 13-1 et 13-2 ; ces opérations sont "projetées" sur les "axes" $\alpha$, $\beta$, $\psi$).
5- A partir des 3 angles $\alpha_n$, $\beta_n$ et $\psi_n$ calculer la matrice $\delta ROTB_{(i)}$ qui en résulte.
6- Calculer $dROT_{(i)}$ à appliquer au bone par la formule :

$$dROT_{(i)} = dROT0_{(i)}{}^* \; \delta ROT_{(i)}$$

7- Recommencer le processus autant de fois que nécessaire.

Le processus décrit dans le paragraphe précédent peut s'appliquer exactement de la même façon pour tous les bones de la chaîne. Chaque bone travaille comme s'il était isolé des autres mais apporte sa contribution à ce que la pseudofeuille atteigne son but. L'action effectuée par un bone dépend de l'action effectuée par les autres bones : si un bone tend vers un attracteur, cela modifie l'attracteur des bones parents, et donc modifie l'action de ceux-ci, bien qu'ils possèdent exactement le même mécanisme.

Pour tous les bones, l'algorithme suivant s'applique (en donnant l'indice i = N à "la pseudofeuille" de la chaîne) :

1- Calculer toutes les rotations absolues $ROT_{(i)}$ pour $i \in [0, N]$
2- Créer un indice i = N définissant le numéro du bone "actif"
3- Stocker le but $ROTB_{(N)}$ de "la pseudofeuille" dans un buffer ROTB
4- Demander au bone de numéro i d'accomplir l'algorithme décrit plus haut en prenant $ROTB_{(i)}$ = ROTB
5- Faire i=(i-1) pour sélectionner le bone père.
5-1- S'il n'y a pas de père, retour en 1

5-2- S'il y a un père, calculer son but $ROTB = ROTB*dROT^{-1}_{(i)}$ et revenir en 4.

Dans cette logique, qui part de "la pseudofeuille" et remonte à la pseudo racine, le but de "l'agent" père dépend du but de "l'agent" fils (c'est la formule $ROTB = ROTB*dROT^{-1}_{(i)}$).

L'orientation à atteindre est fixée par les 3 angles $\alpha_{but}$, $\beta_{but}$ et $\psi_{but}$. Un bone donné a son orientation courante fixée par les 3 angles $\alpha$, $\beta$ et $\psi$. En fait, le processus de convergence permet de minimiser la distance angulaire Da donnée par la relation $Da = |\alpha-\alpha_{but}| + |\beta-\beta_{but}| + |\psi-\psi_{but}|$.

$\alpha$ et $\beta$ sont les coordonnées sphériques de l'axe de rotation. Pour que cet axe puisse parcourir entièrement l'espace il suffit de prendre $\alpha\in[-\pi + \pi]$ et $\beta \in[-\pi/2, + \pi/2]$.

L'axe étant donné, il n'est pas nécessaire que $\psi$ puisse varier d'un tour complet ($\psi\in[-\pi + \pi]$ ) pour exprimer toutes les rotations possibles : il suffit que $\psi$ puisse varier d'un demi-tour, par exemple $\psi\in[0, + \pi]$, pour balayer toutes les rotations. En effet, une rotation d'angle $\psi$ et d'axe u est équivalente à une rotation d'angle $-\psi$ et d'axe -u (le sens de l'axe est changé).

Il y a donc toujours deux choix d'angles possibles pour une même rotation. En particulier, les 3 angles $\alpha_{but}$, $\beta_{but}$ et $\psi_{but}$ sont équivalents aux 3 angles $\alpha'_{but}$, $\beta'_{but}$ et $\psi'_{but}$ tels que :

$$\beta'_{but} = -\beta_{but} \text{ et } \psi'_{but} = -\psi_{but}$$

$$\alpha'_{but} = \alpha_{but} + \pi \text{ si } \alpha_{but} < 0 \text{ ou } \alpha'_{but} = \alpha_{but}-\pi \text{ si } \alpha_{but} > 0$$

Cette dernière relation conserve $\alpha'_{but}\in[-\pi + \pi]$.

Pour décider entre ces deux combinaisons possibles on choisit celle qui donne, par rapport à l'orientation courante $\alpha$, $\beta$ et $\psi$, la distance angulaire Da minimale.

La pseudofeuille d'une chaîne de bones peut atteindre un point spatial donné, indépendamment de son orientation. Atteindre un point spatial peut se faire par des rotations des bones de la chaîne, donc encore avec un champ attracteur angulaire. Cependant, comme la source de ce champ est ici un point spatial et non pas une orientation, on appelle ce champ un champ attracteur angulaire de translation.

Comme illustré sur la figure 5, soient $E_{(i+1)}$ l'extrémité du bone numéro i, et $B_i$ le point spatial à atteindre. Une rotation d'angle $\psi_i$ et d'axe perpendiculaire au plan $(E_i, E_{(i+1)}, B_i)$ a pour effet de rapprocher $E_{(i+1)}$ de $B_i$

Si le numéro du bone est i=N, la figure 5 représente l'extrémité $E_{(N+1)}$ de la pseudofeuille en train d'essayer d'atteindre le point BN. Pour simplifier les notations, on peut poser : $E_{(N+1)} = E$ et $B_N =B$. La formule suivante donne l'expression du vecteur EB, dans le repère absolu :

$$EB = OB - \{TRL_{(N)} + ROT_{(N)} *[0, 0, -L_N]^T\}, \tag{14}$$

où $TRL_{(N)}$ et $ROT_{(N)}$ sont les composantes translation et rotation de la transformation $TRF_{(N)}$ dans le repère absolu.

Chaque bone contribue à ce que la pseudofeuille atteigne le but B : chaque bone a le même travail à faire, à savoir effectuer une rotation d'angle $\psi_i$. La formule qui donne l'expression du vecteur EB dans le repère du bone de numéro i est obtenue de la manière suivante. Dans ce repère, soit $E_{(i+1)}B_i$ l'expression du vecteur EB ; on a:

$$E_{(i+1)}B_i = [ROT_{(i)}]^{-1}*EB \tag{15}$$

$ROT_{(i)}$ étant la composante de la rotation du bone i dans le repère absolu.

A un "instant n" donné, le bone i se déduit de son père par la rotation $dROT_{(i)}$. Pour que ce bone i contribue à ce que la pseudofeuille se rapproche de B, il faut que son extrémité $E_{(i+1)}$ effectue une rotation notée $d^2ROTB_{(i)}$, la matrice exprimée dans le repère du bone i.

Par conséquent, et relativement à son père, le bone i subit une rotation $dROTB_{(i)} = dROT_{(i)}*d^2ROTB_{(i)}$.

Cette rotation à atteindre s'exprime, pour le bone i, dans son repère de construction et en fonction des transformations de référence (dites de construction) $dROT0_{(i)}$ , selon la formule suivante :

$$\delta ROTB_{(i)} = dROT0^{-1}_{(i)}*dROT_{(i)}*d^2ROTB_{(i)}$$

En conclusion chaque bone i voit sa rotation dROT$_{(i)}$ relative à son père tendre vers la rotation $\delta$ ROTB$_{(i)}$. Celle-ci correspond à 3 angles $\alpha_B$, $\beta_B$ et $\psi_B$ qui définissent le but angulaire de translation.

Il suffit donc de calculer d$^2$ROTB$_{(i)}$. Cette rotation d'angle $\psi$ se fait selon un axe u dont la direction est donnée par le produit vectoriel :

$$u = E_i E_{(i+1)} \Lambda E_{(i+1)} B_i$$

Dans le repère du bone i les composantes de u sont (à un coefficient multiplicateur près) :

$$u_x = (E_{(i+1)}B_i)_Y, \; U_y = -(E_{(i+1)}B_i)_X \; et \; U_z = 0$$

La composante en Z de l'axe étant nulle, la matrice d$^2$ROTB$_{(i)}$ est donnée par :

$$d^2ROTB_{(i)} = \begin{vmatrix} u_x^2.(1-\cos Y)+\cos Y & u_x.u_Y.(1-\cos Y) & u_Y.\sin Y \\ u_x.u_Y.(1-\cos Y) & u_Y^2.(1-\cos Y)+\cos Y & -u_x.\sin Y \\ -u_Y.\sin Y & u_x.\sin Y & \cos Y \end{vmatrix}$$

Pour trouver cos$\psi$, on cherche le produit scalaire $E_i E_{(i+1)} \cdot E_{(i+1)} B_{i,}$ et on obtient :

$$\cos \psi = K.[L_i - (EB)_{iZ}]$$

avec

$$K = \{[(E_{(i+1)}B_i)_x]^2 + [(E_{(i+1)}B_i)_Y]^2 + [L_i-(E_{(i+1)}B_i)_Z]^2\}^{-\frac{1}{2}}$$

En fait, comme sin$\psi$=K.$\{[(E_{(i+1)}B_i)_x]^2 + [(E_{(i+1)}B_i)_Y]^2\}^{1/2}$, on n'a pas besoin de calculer explicitement $u_x$ et $u_y$ normalisés à 1, mais on trouve directement les coefficients suivants de la matrice d$^2$ROTB$_{(i)}$ :

$$\begin{vmatrix} u_X.\sin Y = & K.(E_{(i+1)}B_i)_Y \\ u_Y.\sin Y = - & K.(E_{(i+1)}B_i)_x \end{vmatrix}$$

Par ailleurs :

$$\begin{vmatrix} u_X^2.(1-\cos Y) + \cos Y = [K.(E_{(i+1)}B_i)_Y]^2/(1+\cos Y) + \cos Y \\ u_Y^2.(1-\cos Y) + \cos Y = [K.(E_{(i+1)}B_i)_x]^2/(1+\cos Y) + \cos Y \\ u_X.u_Y.(1-\cos Y) = [-K.(E_{(i+1)}B_i)_X].[K.(E_{(i+1)}B_i)_Y]/(1+\cos Y) \end{vmatrix}$$

Donc, tous les coefficients de la matrice d$^2$ROTB$_{(i)}$ sont calculés.

Le calcul de K peut donner une valeur infinie si la quantité $\{[(E_{(i+1)}B_i)_x]^2 + [(E_{(i+1)}B_i)_Y]^2 + [L_i-(E_{(i+1)}B_i)_Z]^2\}$ est trop faible.

Cependant, si $[(E_{(i+1)}B_i)_x]^2 + [(E_{(i+1)}B_i)_Y]^2 << [L_i-(E_{(i+1)}B_i)_Z]^2$, l'angle $\psi$ est soit très voisin de 0, soit très voisin de $\pi$. On peut donc effectuer cette comparaison en prenant un facteur de l'ordre de 10$^{-5}$, ce qui est largement suffisant comme précision et garantit que K sera toujours un nombre.

Dans le cas où $[L_i - (E_{(i+1)}B_i)_Z] > 0$, on produit la matrice identité.

Dans le cas où $[L_i - (E_{(i+1)}B_i)_Z] < 0$, il y a plusieurs matrices possibles car il s'agit d'une symétrie par rapport à un axe indéterminé. Mais il suffit de prendre l'une de ces matrices possibles.

L'algorithme d'influence d'un point spatial peut donc être le suivant :

1- calculer toutes les rotations absolues $ROT_{(i)}$ pour $i \in [0, N]$

2- créer un indice i=N définissant le numéro du bone "agent"

3- calculer EB par la formule (14) ci-dessus

4- calculer $E_{(i+1)}B_i$ par la formule (15) ci-dessus

5- calculer la matrice $d^2ROTB_{(i)}$, comme décrit précédemment

6- en déduire la matrice $\delta ROTB_{(i)} = dROT0^{-1}{}_{(i)} * dROT_{(i)} * d^2ROTB_{(i)}$

7- déduire, de la matrice $\delta ROTB_{(i)}$, les 3 angles $\alpha_B$, $\beta_B$, et $\psi_B$

8- appliquer la théorie des champs en considérant ces 3 angles comme un champ attracteur angulaire, et en déduire $\delta ROT_{(i)}$, puis la rotation $dROT_{(i)}$ à appliquer au bone (selon la formule $dROT_{(i)} = dROT0_{(i)} * \delta ROT_{(i)}$)

9- faire (i-1 ) $\rightarrow$ i, pour sélectionner le bone père.

9-1- S'il n'y a pas de père, revenir en 1

9-2- S'il y a un père, recalculer $TRF_{(N)}$ (qui vient d'être modifié) puis revenir en 3.

On peut maintenant décrire comment la pseudofeuille et tous les bones de la chaîne peuvent être attirés selon une direction commune. Cette direction d'attraction constitue un champ de gravité. On appelle cet attracteur : attracteur angulaire de gravité. On utilise les rotations des bones pour produire cet effet ; la racine est comme fixée sur un pivot (qui ne réagit pas) et tout l'ensemble "tombe" selon la direction du champ de gravité. Si les articulations sont sans contraintes, l'ensemble se "déroule" et se tend vers cette direction.

Le principe est le même que précédemment sauf que le vecteur EB a 3 composantes fixes qui ne dépendent pas de la position de la pseudofeuille. Autrement dit, la formule $EB = OB - \{TRL_{(N)} + ROT_{(N)} * [0, 0, -L_N]^T \}$ n'est plus à utiliser, car EB est une constante.

Tous les calculs sont identiques au cas précédent, sauf pour trouver $\cos\psi$, pour lequel on cherche le produit scalaire $E_i E_{(i+1)}.E_i$ (et non plus $E_i E_{(i+1)}.E_{(i+1)}B_i$). Ceci équivaut à faire la seule modification $L_i = 0$ dans les formules ci-dessus. Dans le produit scalaire $E_i E_{(i+1)}.E_i$, $E_i$ est l'expression du champ de gravité E dans le repère du bone de numéro i, soit $E_i = [ROT_{(i)}]^{-1} * E$.

Pour ce qui est du champ attracteur angulaire de gravité, l'algorithme est simple : chacun des bones de la chaîne tend "tout seul" (indépendamment des autres) à ce que son axe (l'axe du bone et non l'axe de rotation) s'oriente vers le champ de gravité.

Les composantes rotation (ou orientation) du mouvement sont supposées subir l'influence de champs angulaires. Il y a, d'après ce qui a été exposé, 4 types différents de champs angulaires :

1- des champs attracteurs angulaires de rotation. Ces champs correspondent à une orientation que la pseudofeuille doit atteindre.

2- des champs attracteurs angulaires de translation. Ces champs correspondent à un point spatial que la pseudofeuille doit atteindre.

3- des champs attracteurs angulaires de gravité. Ces champs correspondent à une direction spatiale que l'ensemble des bones de la chaîne doivent atteindre.

4- des champs répulsifs angulaires des contraintes. Ces champs correspondent aux orientations que doivent éviter les différents bones de la chaîne.

L'ensemble des 3 champs attracteurs constitue un objectif global à atteindre.

Soient $E_{aR}$, $E_{aT}$ et $E_{aG}$ les 3 champs attracteurs et Er le champ répulsif, le champ total E est $E = E_{aR} + E_{aT} + E_{aG} + E_r$.

Chaque champ attracteur $E_a$ a pour composantes :

$$E_a [K.(\alpha_{but} - \alpha), K.(\beta_{But} - \beta), K.(\psi_{but} - \psi)]$$

Ainsi les composantes du champ total $E_a$ sont :

$$\left|\begin{aligned}E_a &= K_R.(a_{butR} - a) + K_T.(a_{butT} - a) + K_G.(a_{butG} - a) + E_{ra}\\E_b &= K_R.(b_{butR} - b) + K_T.(b_{butT} - b) + K_G.(b_{butG} - b) + E_{rb}\\E_Y &= K_R.(Y_{butR} - Y) + K_T.(Y_{butT} - Y) + K_G.(Y_{butG} - Y) + E_{rY}\end{aligned}\right.$$

Ces équations montrent que les 3 objectifs sont linéairement combinés, avec possibilité de pondération des 3 coefficients d'influence $K_R$, $K_T$ et $K_G$.

Chaque bone de la chaîne contribue à ce que la pseudofeuille atteigne l'orientation donnée.

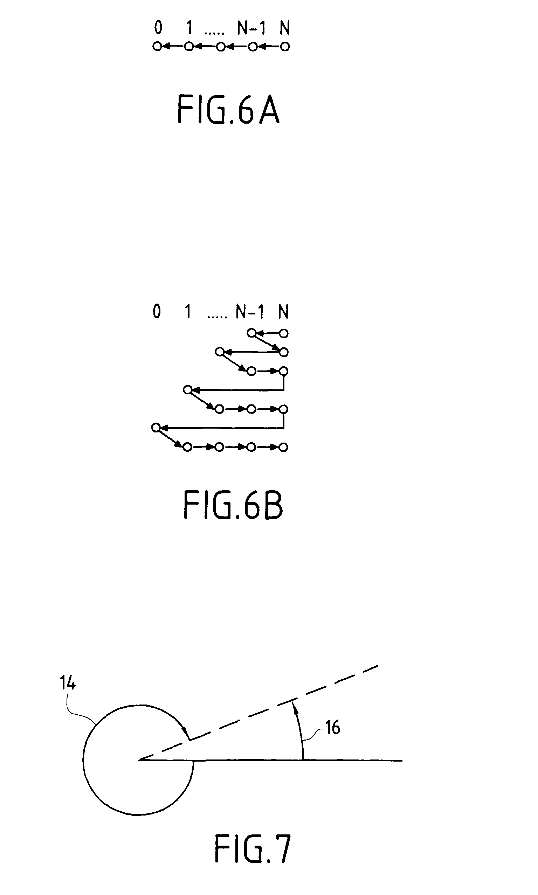

Selon un mode de réalisation (figure 6A), les bones travaillent dans un certain ordre.

C'est, d'abord, le bone N-1 qui agit. Ensuite, l'objectif du bone N-2 est calculé, et il effectue son action. Puis, l'objectif du bone N-3 est calculé et il agit, et ainsi de suite jusqu'au bone 0. Cette façon de faire est "linéairement remontante", et donne de bons résultats.

Selon une autre logique, on tient compte de l'action du bone N-2 qui perturbe l'action précédente du bone N, ...etc. Il est alors souhaitable de faire "réagir" le bone N-1 à l'action du bone N-2, et ensuite seulement de faire agir le bone N-3. Cette autre procédure est illustrée sur la figure 6B.

Chaque action d'un bone de numéro i a alors pour conséquence une réaction "descendante" sur les bones successivement de numéros i+1, i+2...N-1.

Quel que soit l'ordre de parcours des bones, chacun d'eux est influencé par le mouvement des autres. Chaque bone adapte son action, bien sûr au but à atteindre par la pseudofeuille, mais aussi à l'action précédente des autres bones.

Au total les résultats sont meilleurs avec cette deuxième procédure. L'algorithme effectue toujours des "micro-résolutions" qui peuvent être remises en cause à chaque nouvelle itération. Ceci permet de ne pas être limité, à l'instant n, à une solution, alors qu'une autre solution, plus intéressante, va se présenter à l'instant n+1.

Cette nouvelle méthodologie d'action indique que l'objectif d'un bone de numéro i-1 ne peut être calculé à partir de l'objectif du bone de numéro i puisque l'ordre "linéairement remontant" n'est plus valide. On calcule donc, de façon absolue, l'objectif d'un bone quelconque. Le calcul des angles $(\alpha_{butR}, \beta_{butR}, \psi_{butR})$, $(\alpha_{butT}, \beta_{butT}, \psi_{butT})$ et $(\alpha_{butG}, \beta_{butG}, \psi_{butG})$, pour chacun des 3 champs attracteurs angulaires est expliqué ci-dessous.

1- Champ attracteur angulaire de rotation : ($ROTB_N$ est l'orientation à atteindre par la pseudofeuille)

      1-1- Calculer $ROTB_i = ROTB_N *[ROT_N]^{-1}*ROT_i$
      1-2- Calculer $dROTB_i = [ROT_{(i-1)}]^{-1}*ROTB_i$ ou $dROTB_i = ROTB_i$ si i=0
      1-3- Calculer $\delta ROTB_i = [dROT0_i]^{-1}*dROTB_i$
      1-4- Déduire de $\delta ROTB_i$ les angles $(\alpha_{butR}, \beta_{butR}, \psi_{butR})$,

2-Champ attracteur angulaire de translation : ($TRLBN$ est le point spatial à atteindre par la pseudofeuille).

      2-1- Calculer $EB = TRLB_N - TRL_N + ROT_N *[0, 0, L_N]^T$
      2-2- Calculer $EB_I = [ROT_i]^{-1} *EB$ et en déduire $d^2ROTB_i$
      2-3- Calculer $\delta ROTB_i = [dROT0_i]^{-1}*dROT_i*d^2ROTB_i$
      2-4- Déduire de $\delta ROTB_i$ les angles $(\alpha_{butT}, \beta_{butT}, \psi_{butT})$

3- Champ attracteur angulaire de gravité : ($EG$ est la direction à atteindre par la pseudofeuille)

      3-1- Calculer $E_{Gi} = [ROT_i]^{-1}*E_G$ et en déduire $d^2ROTB_i$
      3-2-Calculer $\delta ROTB_i = [dROT0_i]^{-1}*dROT_i*d^2ROTB_i$
      3-3- Déduire de $\delta ROTB_i$ les angles $(\alpha_{butG}, \beta_{butG}, \psi_{butG})$

Lorsque tous ces angles attracteurs sont calculés, le champ total E l'est aussi. La suite du procédé qui produit l'action du bone i s'écrit :

4- Calculer par la théorie du champ les angles $((\alpha, \beta, \psi)$ à donner au bone i s'écrit :

5- En déduire la matrice $\delta ROT_i$

6- En déduire la matrice $dROT_i = dROT0_i*\delta ROT_i$, qui est la nouvelle matrice de rotation du bone i

7- Si le processus n'est pas terminé (un autre bone doit subir une action) il faut revenir en 1, mais après avoir mis à jour les transformations $TRF_N$ et $TRF_i$ qui viennent d'être modifiées.

Le procédé exposé ci-dessus fait appel à des descriptions du mouvement et des positions en termes d'angles. Les formules indiquées présentent l'avantage d'être linéaires. En fait, ceci peut s'avérer gênant et poser un certain nombre de problèmes, notamment dans le cas de la combinaison des deux angles ($\alpha$, $\beta$) qui représentent l'axe de rotation; ou, dans le cas d'une interpolation entre deux couples ($\alpha_1$, $\beta_1$) et ($\alpha_2$, $\beta_2$) où les composantes $\alpha$ et $\beta$ sont interpolées linéairement, mais séparément. Ainsi, on peut aboutir à des discontinuités dans les angles, c'est-à-dire à des sauts brusques au cours du mouvement. Comme illustré sur la figure 7 un mouvement de rotation peut alors être effectué selon un chemin 14 (dans le sens des aiguilles d'une montre sur la figure 7) plutôt que selon l'autre chemin 16 (sens contraire des aiguilles d'une montre), et ceci de manière difficilement prévisible.

Une solution à ce problème consiste à utiliser une description en termes de quaternions. Une rotation est alors représentée non pas par des angles, mais par un quaternion unitaire Q. Le désavantage, avec cette description, est que les équations de champ deviennent non linéaires.

Comme déjà expliqué ci-dessus, à chaque bone $B_i$ correspond une transformation $dTRF_i$. La partie rotation de cette transformation s'exprime sous la forme d'un quaternion qu'on appelle $dQ_i$. La théorie des quaternions est exposée dans l'ouvrage de S.G. HOGGAR intitulé "Mathematics for Computer Graphics", Cambridge University Press.

Physiquement, un quaternion $dQ$ est une rotation d'angle $d\psi$ (spin ou "rotation propre") autour d'un axe $dA$ qui est un vecteur entièrement défini par 2 angles $d\alpha$ (ascension droite ou "site") et $d\beta$ (déclinaison ou "azimuth"). Soit $dP_a$ l'ensemble de ces 3 angles : $dP_a$ = ($d\alpha$, $d\beta$, $d\psi$) ($P_a$ comme "Point Angulaire"). La connaissance de $dP_a$ détermine celle de $dQ$, mais la connaissance de $dQ$ donne 2 valeurs possibles pour $dP_a$, parce qu'un changement de signe de $d\psi$ et un changement de sens de l'axe A donnent la même rotation.

Théoriquement, il suffit de stocker $dP_a$ dans une base de données pour que la rotation entre un bone et son père soit définie.

On peut introduire également une décomposition de la rotation $dQ_i$ en plusieurs termes.

Dans un état initial la chaîne de bones est une suite de transformations relatives qui sont fixées par construction. Soit $dTRF_{0(i)}$ ces transformations "de repos". Lorsque la chaîne se meut, chaque transformation $dTRF_{(i)}$ subit une variation $\delta TRF_{(i)}$ autour de $dTRF_{0(i)}$ selon la loi : $dTRF_{(i)} = dTRF_{0(i)} * \delta TRF_{(i)}$. Ainsi c'est la suite des variations $\delta TRF_i$ qui produit le mouvement. En termes de quaternions cela s'écrit : $dQ_i = dQ_0 * \delta Q_i$

Autrement dit, le quaternion $dQ_i$ est considéré comme étant la composition d'un quaternion d'équilibre $dQ_{io}$ et d'une variation $\delta Q_i$ ce qui s'écrit : $dQ_i = d_{Qio}.\delta Q_l$.(le produit est ici un produit, ou plutôt une composition, au sens des quaternions). Le quaternion $dQ_i$ représente l'orientation de $B_i$ relativement à $B_{(i-1)}$ alors que l'orientation de $B_i$ relativement à un repère absolu est représentée par le quaternion absolu $Q_i$ selon la formule récurrente $Q_i = Q_{(i-1)} dQ_i$.

Une décomposition supplémentaire amène à considérer la rotation $\delta Q_i$, elle-même comme le produit de deux rotations : $\delta Q_i = \delta Q_{i0} * d^3 Q_i$, du fait que le traitement des contraintes angulaires impose une symétrie dans les valeurs limites de $d\psi$ (l'angle minimum doit être égal et opposé à l'angle maximum).

Au total, le quaternion absolu $Q_i$ s'écrit :

$$Q, = dQ_{i-1} * \delta Q_{i0} * d^3 Q_i \qquad (16)$$

Et, finalement c'est $d^3 Q_i$ qui peut être considérée comme la véritable variable, $dQ_i$ et $\delta Q_{i0}$ n'étant que des "paramètres" réglables, ou imposés par construction ou à cause des contraintes.

Cette décomposition supplémentaire peut s'interpréter aussi de la façon suivante : la rotation de construction initiale $dQ_0$ est devenue maintenant la rotation $d'Qo = dQ_0 * d^2 Q_0$ ce qui amène à écrire finalement : $dQ = d'Q_0 * d^3 Q$.

A un instant donné n, tous les quaternions absolus du système articulé peuvent être calculés à partir des variations $\delta Q_i$ selon les formules ci-dessus.

Les variations $\delta Q_i$ peuvent être déduites des quaternions absolus $Q_i$ selon la formule inverse :

$$\delta Q_i = [dQ_{i0}]^{-1} . [Q_{(i-1)}]^{-1} . Q_i \qquad (20)$$

Supposons que le bone $B_i$ soit attiré par une orientation absolue exprimée par le quaternion $Q_B$. La rotation du bone $B_i$ (exprimée par le quaternion $Q_i$) est soumise à l'influence d'une rotation attractrice (exprimée par un quaternion attracteur $Q_E$). $Q_E$ joue le même rôle que le champ E de l'équation (13-1) et exprime l'intention du bone $B_i$ d'atteindre l'orientation $Q_B$.

Pour un point, l'expression d'un champ attracteur n à l'instant n s'écrit $E_n = P_B - P_n$. Mais, pour un quaternion, on remplace cette différence par la multiplication suivante :

$$Q_{En} = [Q_{in}]^{-1}.Q_B \qquad (21)$$

Pour un quaternion : $Q_{En} = Q_I$(Identité), si $Q_{in} = Q_B$, ce que vérifie la formule $Q_{En} = [Q_{in}]^{-1}.Q_B$.

Mais l'équation (13-1) montre que le champ En est multiplié scalairement par un coefficient angulaire d'inertie $k_i$. Ce coefficient a ici la même signification que celle déjà expliqué ci-dessus ; de préférence $0 < k_I < 1$. Dans le langage des quaternions le terme $k_i E_n$ est remplacé par le terme :

$$Q_{En} = [Q_{in}]^{-1}.Q'_B \qquad (22)$$

$Q'_B$ étant le quaternion interpolé sphériquement entre $Q_{in}$ et $Q_B$ selon le coefficient $k_i$, ce que nous écrivons ainsi : $Q'_B = Q_{in}(°_{ki})Q_B$

Le symbole $(°k)$ est l'opérateur d'interpolation sphérique de coefficient $k_i$.

La multiplication par un scalaire équivaut à une interpolation sphérique entre quaternions, et l'addition ou la soustraction équivalent à une multiplication de quaternions. On a donc les formules suivantes de la théorie du champ, valable pour les quaternions:

$$V_n = Q_{En}.[Q_I(°_{Ka})V_{(n-1)}] \qquad (23)$$

$$Q_{in} = Q_{i(n-1)} V_n \qquad (24)$$

Compte tenu de l'équation (22), l'expression développée de $V_n$ est :

$$V_n = [Q_{in}]^{-1} [Q_{in}(°ki.)Q_B].[Q_I(°_{Ka})V_{(n-1)}]$$

$k_a$ est le coefficient d'amortissement angulaire (voir explications à ce sujet déjà données ci-dessus) ; de préférence, ici encore, on prend $0 \le k_a < 1$

D'un point de vue algorithmique voici les opérations que l'on peut effectuer pour qu'un bone $B_i$ tende (comme un système asservi en orientation) vers un attracteur absolu $Q_B$.

1- Calculer la variation $\delta Q_{Bn}$ qu'il faudrait donner au bone $B_i$ pour que l'attracteur $Q_B$ soit exactement atteint, avec la formule (20), dans laquelle on remplace $Q_i$ par $Q_B$ :

$$\delta Q_{Bn} = [dQ_{i0}]^{-1}. [dQ_{(i-1)n}]^{-1}Q_B$$

La variation $\delta Q_{Bn}$ a l'indice n (qui représente le temps) car elle dépend de $dQ_{(i-1)n}$, qui est généralement variable.

2- Calculer le champ qui en résulte, en utilisant la formule (22), dans laquelle on remplace $Q_{Bn}$ par $\delta Q_{Bn}$ :

$$\delta Q_{En} = [Q_{in}]^{-1}. [Q_{In}(°_k)\delta Q_{Bn}]$$

3- Calculer le quaternion vitesse $V_n$ avec la formule (23), dans laquelle on remplace $Q_{En}$ par $\delta Q_{En}$

4- Calculer le quaternion $\delta_{Qin}$ avec la formule (24), dans laquelle on remplace $Q_{in}$ et $Q_{i(n-1)}$ respectivement par $\delta Q_{in}$ et $\delta Q_{i(n-1)}$

5- Calculer, à partir de la formule (24) le quaternion :

$$Q_{in} = Q_{(i-1)n}.dQ_{i0}. \delta Q_{in}$$

Cet algorithme, répété pour tous les bones d'une chaîne depuis son extrémité qu'on veut asservir (faire tendre vers un but fixé) en remontant vers son autre extrémité, constitue un nouvel algorithme de cinématique inverse.

Les contraintes angulaires sont, quant à elles, définies de la manière suivante : au quaternion $d^2Q$ est associé un axe $d^2A$ et un angle de rotation $d^2\psi$ autour de cet axe, et au quaternion $d^2Q_0$ est associé un axe $d^2A_0$ et un angle de rotation $d^2\psi_0$ autour de cet axe. $d^2Q$ peut varier autour de $d^2Q_0$, de telle sorte que :

- l'axe $d^2A$ a le droit d'être contenu dans un cône d'axe $d^2A_0$ et de demi-angle $\gamma$
- l'angle $d^2\psi$ a le droit de varier autour de $d^2\psi_0$ de $\pm\Delta\psi/2$, $\Delta\psi/2$ étant le demi-angle de variation autorisée pour $d^2\psi$;

Les contraintes angulaires (notées $d^3Ca$) sont donc l'ensemble des deux valeurs $\gamma$ et $\Delta\psi$ : $d^3Ca = (\Delta\psi, \gamma)$. La variation de $d^2Q$ autour de $d^2Q_0$ s'effectue par la quaternion $d^3Q$ selon la relation $d^2Q = d^2Q_0*d^3Q$. Physiquement $d^3Q$ exprime les variations d'une rotation autour d'une rotation d'axe $d^2A_0$ et d'angle $d^2\psi_0$.

Pour finir, on n'a besoin de stocker, dans une base de données, que les angles $dPa_0$, $d^2Pa_0$, $d^3Ca$ et $dPa$. $d^2A_0$ et $d^2Q_0$ se déduisent de $d^2Pa_0$, $dQ_0$ et $d^3Q$ se déduisant respectivement de $dPa_0$ et $d^3Pa$. De $dQo$ et $d^2Q_0$, on déduit $d'Q_0$.

L'axe $d^2A_0$ peut être calculé, parce qu'utilisé pour les contraintes angulaires. Si, dans la base de données, on choisit de ne pas stocker la variation (on stocke la rotation pour $d^3Q = I$), on peut éviter d'y stocker $d^3Pa$.

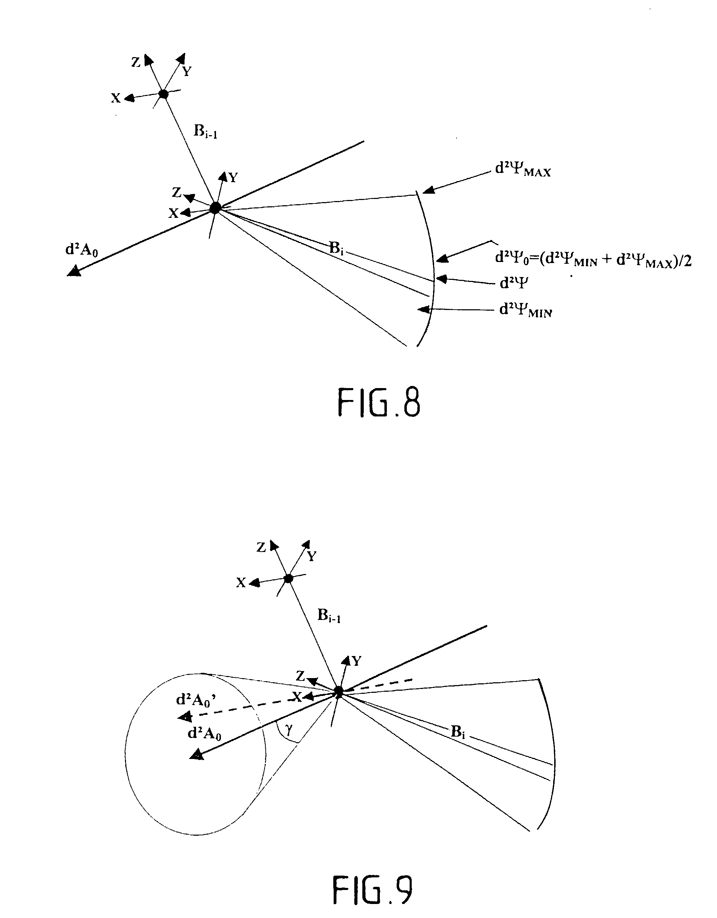

Du point de vue graphique, soient deux bones $B_i$ et $B_{i-1}$ (comme illustré en figure 8). On cherche à définir les contraintes angulaires au niveau de l'articulation que forment ces deux bones.

On considère le cas où la rotation autour de l'articulation est une rotation autour de l'axe noté $d^2A_0$, la contrainte sur celui-ci étant maximale (c'est-à-dire que cet axe n'a aucun degré de liberté, autrement dit $\gamma=0$).

La rotation actuelle $dQ$ du bone $B_i$ correspond à une rotation d'angle $d^2\psi$ autour de l'axe $d^2A_0$ On fait tourner le bone $B_i$ autour de l'axe $d^2A_0$ de manière à définir les bornes extrêmes $d^2\psi_{MIN}$ et $d^2\psi_{MAX}$ de l'angle $d^2\psi$. Ces bornes extrêmes définissent :

- La variation $\Delta\psi = d^2\psi_{MAX} - d^2\psi_{MIN}$, qui donne $d^3Ca = (\Delta\psi, \gamma = 0)$
- Le quaternion $d^2Q_0$, déduit de l'axe $d^2A_0$ et de l'angle $d^2\psi_0 = (d^2\psi_{MIN} + d^2\psi_{MAX})/2$. Comme à partir de l'axe, on peut trouver les deux angles $\alpha$ et $\beta$ qui le définissent, on en déduit également $d^2Pa_0$.

La position de "repos" est celle qui correspond à une variation nulle ($d^3Q = I$). On fait tourner le bone $B_i$ autour de l'axe $d^2A_0$ jusqu'à ce qu'on l'obtienne. La rotation $dQ$ ainsi obtenue est $dQ = d'Q_0 = dQ_0*d^2Q_0$ d'où on déduit $dQ_0$ (ou encore $dPa_0$).

Si on donne de la liberté à l'axe de rotation $d^2A_0$ lui-même, cette liberté se traduit par la possibilité qu'a l'axe d'être à l'intérieur d'un cône de demi-angle $\gamma$. L'axe du cône est l'axe de rotation $d^2A_0$. En outre, quelle que soit la position de l'axe de rotation à l'intérieur du cône, la contrainte sur l'angle $d^2\psi$ est toujours la même.

Ceci signifie que le réglage de la contrainte sur l'angle $d^2\psi$ peut se faire pour toute position de l'axe $d^2A_0$ comme indiqué plus haut.

Ensuite, pour le réglage de l'angle $\gamma$, on peut imaginer de visualiser ce cône comme sur la figure 9.

Comme on l'a dit, l'axe du cône est l'axe de rotation $d^2A_0$. Si l'axe de rotation est $d^2A_0'$ (voir figure 9), et qu'on veuille que la contrainte sur l'axe ne soit ainsi pas également répartie à l'intérieur du cône, il faut faire comme exposé ci-dessus, la seule différence étant que la rotation de "repos" aura cette fois pour axe non pas $d^2A_0$ mais $d^2A_0'$.

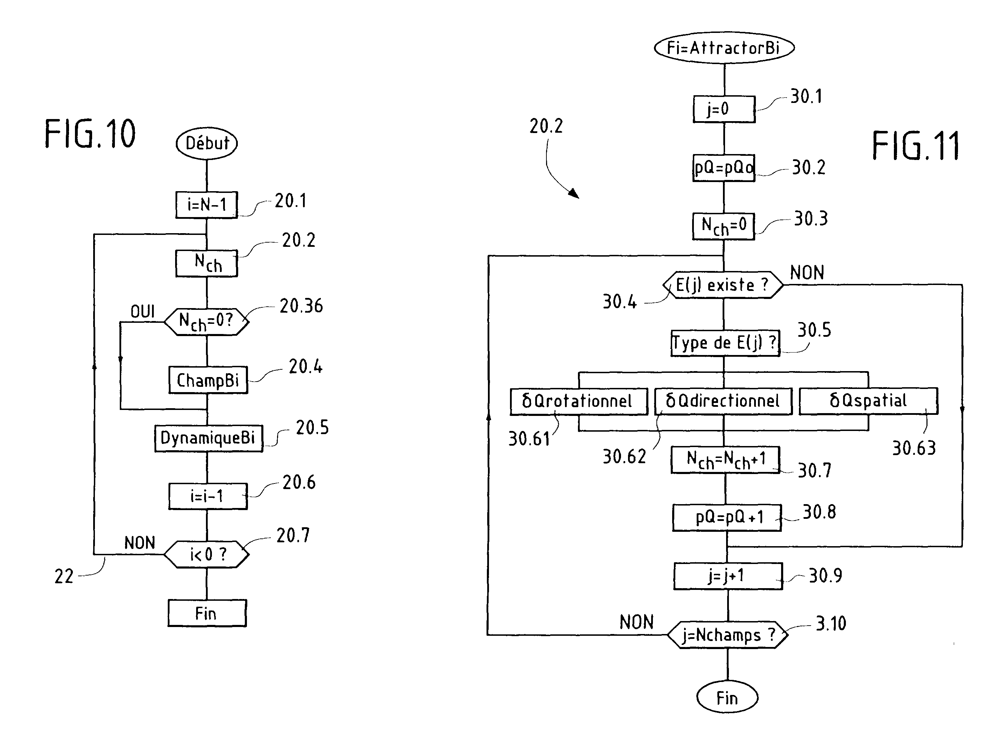

Une description algorithmique détaillée de cinématique inverse selon l'invention, mettant en oeuvre les quaternions, va maintenant être donnée, en liaison avec les figures 10 à 16.

Soit une chaîne de N "bones" $B_o$ à $B_{(N-1)}$. $B_{(i-1)}$ est le père de $B_i$. $B_o$ est appelé "pseudoracine" et $B_{(N-1)}$ "pseudofeuille". Le bone $B_{(N-1)}$ est influencé par un ensemble de champs, constitué d'un ensemble de champs attracteurs qui représentent le but qu'il doit atteindre et/ou d'un ensemble de champs répulsifs qui représentent un, ou des, obstacle(s) à éviter.

L'ensemble des champs est une combinaison quelconque de champs qu'il est possible de classer dans l'une des 3 catégories suivantes :

- les champs de type spatial : un champ attracteur (respectivement répulsif) de ce type traduit le fait que la pseudofeuille doit atteindre (respectivement éviter) un point spatial donné; ce type de champ concerne ou décrit aussi les transformations de type translation ;
- les champ de type directionnel : un champ attracteur (respectivement répulsif) de ce type traduit le fait que la pseudofeuille doit s'orienter selon (respectivement éviter) une direction donnée ; il s'agit d'un champ spatial pour lequel le point à atteindre (respectivement à éviter) est situé à l'infini;
- les champs de type rotationnel : un champ attracteur (respectivement répulsif) de ce type traduit le fait que la pseudofeuille doit atteindre (respectivement éviter) une orientation, c'est-à-dire une rotation, donnée.

L'algorithme de la figure 10 explicite comment, à chaque instant n, la pseudofeuille tente d'atteindre son but fixé, en collaboration avec tous les autres bones de la chaîne.

Plus précisément l'algorithme produit, pour tous les bones $B_i$ de la chaîne, les valeurs du quaternion $dQ_i$ relatif au père $B_{(i-1)}$. S'il n'y a pas de père (i=O) $dQ_i$ s'identifie au quaternion absolu.

A chaque passage dans l'algorithme la pseudofeuille se rapproche du but fixé, en même temps que les autres bones de la chaîne contribuent à ce résultat.

Cet algorithme est répété autant de fois que l'on veut, par exemple indéfiniment. En effet, une fois le but atteint par la pseudofeuille, il n'est pas forcément inutile de continuer à faire tourner l'algorithme. Par exemple, si, le but étant atteint, on force le quaternion $dQ_i$ d'un bone, qui n'est pas la pseudofeuille, à changer, il en résulte une modification du quaternion absolu $Q_{(N-1)}$ de la pseudofeuille, sauf si l'algorithme tourne encore. Autrement dit, dans le cas où son but est atteint par la pseudofeuille, la boucle 22 permet de maintenir celle-ci dans son état.

Dans une première étape 20-1, la valeur N-1 (index de la pseudofeuille) est affectée à i, index de Bone.

Puis (étape 20-2) le nombre de champs $N_{ch}$ (attracteurs ou répulsifs) des bones $B_i$ est calculé : si $N_{ch} = 0$, il n'y a pas de champ. Le calcul de ces champs sera détaillé ci-dessous, en liaison avec la figure 11.

Un test est effectué, pour déterminer si $N_{ch}$ est égal à 0 (étape 20-3).

Si $N_{ch} = 0$ (pas de champ, ni attracteur, ni répulsif) la dynamique de $B_i$ (étape 20-5) peut quand même être effectuée pour exécuter son régime transitoire de relaxation.

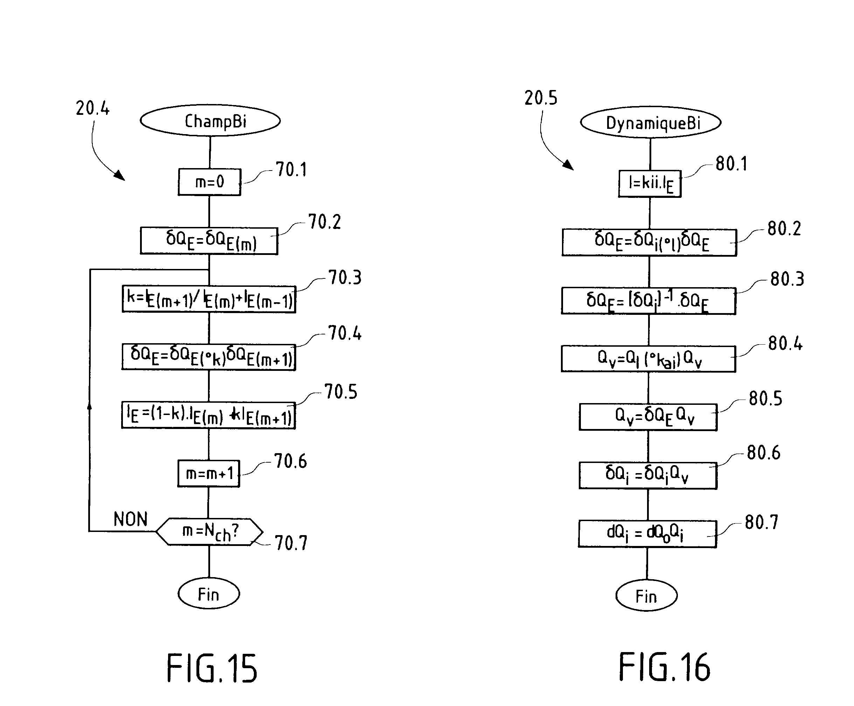

L'étape 20-4 est un calcul de champ global du bone $B_i$, combinaison des différents champs. Le calcul sera détaillé ci-dessous, en liaison avec la figure 15.

L'étape 20-5 correspond au calcul de la vitesse et du quaternion relatifs au bone $B_i$. Ce calcul est détaillé ci-dessous en liaison avec la figue 16.

L'algorithme passe ensuite au bone père $B_{i-1}$ (étape 20-6). Un test (20-7) permet de déterminer si c'est le pseudoracine qui vient d'être traitée. Donc, si i<0, l'algorithme s'arrête.

Cet algorithme utilise un asservissement en temps réel (boucle 22). L'utilisation conjointe des quaternions, de la théorie de l'influence et de l'asservissement en temps réel permet de réaliser une cinématique inverse, fonctionnelle et dynamique.

La figure 11 illustre le calcul des différents champs (ici: pour les champs attracteurs, le même schéma étant valable pour les champs répulsifs) du bone $B_i$.

Tout d'abord, l'index j d'un champ d'influence associé à la pseudofeuille est initialisé (étape 30-1).

Puis (étape 30-2) un pointeur $pQ_o$ est associé sur le début d'un tableau qui va être créé ; ce tableau regroupe les structures constituées chacune par un ensemble (quaternion, intensité). Chaque champ d'influence va en effet être transformé en une telle structure.

On initialise ensuite (étape 30-3) le nombre $N_{ch}$ de champs existants, ou non inhibés, stockés dans le tableau pointé par $pQ_o$,

Le test suivant (étape 30-4) permet de décider si un champ d'influence d'index j de la liste des champs d'influence associés à la pseudofeuille, existe ou n'est pas inhibé.

Si ce champ existe et n'est pas inhibé, le type de champ E d'index j est ensuite déterminé (étape 30-5) : s'agit-il d'un champ rotationnel, ou directionnel ou spatial ?

Selon le type déterminé, l'algorithme choisit ensuite l'un des traitements qui suivent (étape 30-6).

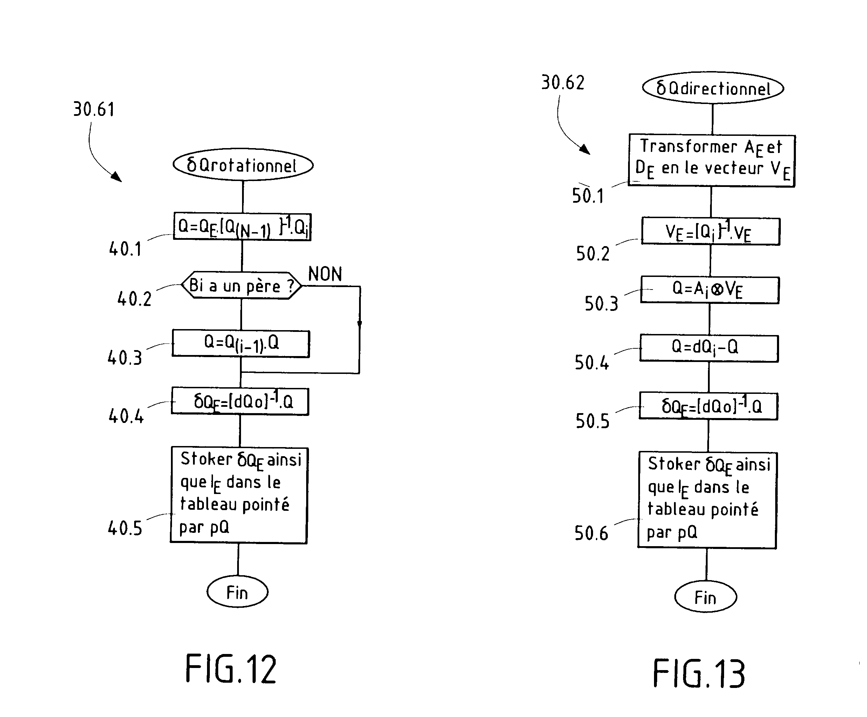

Au cours de cette étape 30-6, est calculée la variation $dQ_i$ (notée aussi $dQ_{Ei}$) qu'il faudrait appliquer au quaternion $dQ_i = dQ_{io}.dQ_i$ : pour que la pseudofeuille atteigne exactement son but, par exemple par un plus court chemin. Cette étape 30-6 est décrite de manière plus détaillée ci-dessous en liaison avec les figures 12 à 14.

Dès qu'un champ est décelé, la variable $N_{ch}$ est incrémentée (étape 30-7), et on passe ensuite à l'élément suivant du tableau (30-8). Le champ d'influence suivant est associé à la pseudofeuille (étape 30-9). Lorsque j est égal au nombre $N_{champs}$ de champs d'influence associés à la pseudofeuille, l'algorithme s'arrête.

La figure 12 décrit de manière détaillée le calcul de la variation dQ à appliquer en cas de champ rotationnel.

Le champ d'influence rotationnel est défini par le quaternion absolu QE que la pseudofeuille doit atteindre (ou éviter), ainsi que par son intensité $I_E$.

On initialise un quaternion absolu Q par $Q_E [Q_{N-1}]^{-1}Q_i$.

On détermine ensuite si $B_i$ a un père (étape 40-2):

- Si il n'a pas de père, l'algorithme passe directement à l'étape 40-4.
- Sinon, on remplace le quaternion Q par le quaternion $Q_{(i-1)}.Q$ (étape 40-3).

L'étape 40-4 est l'étape de calcul de la variation du quaternion absolu $Q_E$ :

$$dQ_E = [dQ_o]^{-1}Q$$

On stocke ensuite (étape 40-5) dQE, ainsi que $I_E$ dans le tableau pointé par pQ.

La figure 13 décrit de manière détaillée le calcul de la variation dQ à appliquer en cas de champ directionnel.

Le champ d'influence directionnel est défini par son intensité $I_E$ ainsi que par un vecteur absolu $V_E$ vers l'axe duquel la pseudofeuille tend à devenir parallèle. Ce vecteur absolu $V_E$ peut en fait être caractérisé par deux angles empruntés à l'astronomie : l'ascension droite $A_E$ et la déclinaison $D_E$. Les formules utilisées pour transformer $V_E$ (étape 50-1) sont $V_E = (X,Y,Z) = (\cos D_E.\sin A_E,\ \sin D_E,\ \cos D_E.\cos A_E)$.

$V_E$ est ensuite calculé dans le repère du bone $B_i$ (étape 50-2).

On recherche ensuite (étape 50-3) le quaternion Q associé à la rotation d'axe perpendiculaire au plan formé par $A_i$ (axe du Bone $B_i$ dans son repère local) et $V_E$ et d'angle $(A_i, V_E)$. Autrement dit, il s'agit d'une rotation qui fait tourner $A_i$ pour le rendre parallèle à $V_E$ (le schéma serait équivalent avec des champs répulsifs). Dans le repère local du bone $B_i$, les coordonnées de A, sont $(0,0,-L_i)$, $L_i$ étant la longueur du bone $B_i$. Sur la figure 13, le symbole $\otimes$ signifie : trouver le quaternion Q associé à la rotation définie ci-dessus.

Une fois Q obtenu, on obtient dQE par les opérations définies en 50-4 et 50-5. $dQ_E$ et $I_E$ sont ensuite stockés dans le tableau pointé par pQ.

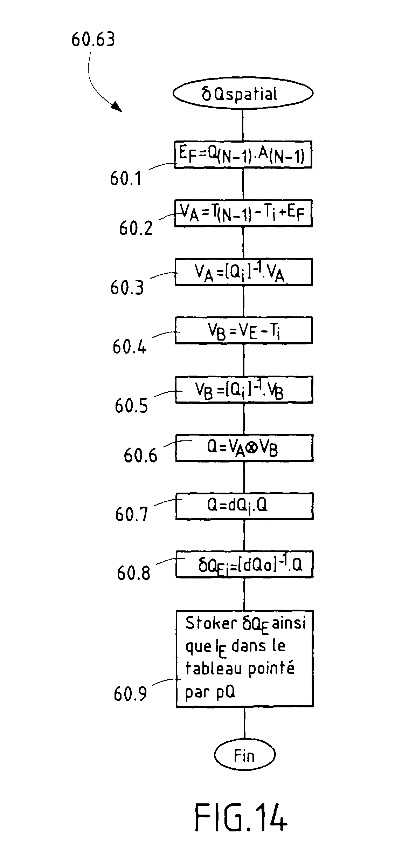

La figure 14 décrit de manière détaillée le calcul de la variation dQ à appliquer en cas de champ spatial.

Le champ d'influence spatial est défini par un vecteur absolu $V_E$, dont les 3 coordonnées sont celles d'un point spatial dans l'espace 3D, ainsi que par son intensité $I_E$. C'est l'extrémité de la pseudofeuille qui doit atteindre (ou éviter) $V_E$.

Soit $A_{(N-1)}$ l'axe du bone $B_{(N-1)}$ (la pseudofeuille) dans son repère local. Ses coordonnées sont donc : $A_{(N-1)} = (0,0,-L_{(N-1)})$, $L_{(N-1)}$ étant la longueur du bone $B_{(N-1)}$ $E_F$ est l'expression de $A_{(N-1)}$ dans le repère absolu.

Soit $T_{(N-1)}$ (respectivement $T_i$), la composante translation absolue de la transformation du bone $B_{(N-1)}$ (respectivement $B_i$) $V_A$ tel que défini à l'étape 60-2, est donc le vecteur absolu qui a pour origine l'origine du bone $B_i$ et pour extrémité l'extrémité du bone $B_{(N-1)}$ (la pseudofeuille).

VA est ensuite calculé dans le repère local du bone $B_i$ (étape 60-3).

On calcule ensuite (étape 60-4) le vecteur absolu $V_B$ qui a pour origine l'origine du bone $B_i$ et pour extrémité le point spatial $V_E$ à atteindre. Puis (étape 60-5), on calcule $V_B$ dans le repère local au bone $B_i$.

On déduit ensuite, de $V_A$ et de $V_B$, le quaternion Q qui est associé à la rotation d'axe perpendiculaire au plan formé par $V_A$ et $V_B$, et d'angle $(V_A, V_B)$.

Enfin, $dQ_E$ est obtenu par les opérations définies en 60-7 et 60-8. $dQ_E$ et $I_E$ sont stockés dans le tableau pointé par pQ (étape 60-9).

La figure 15 représente, de manière détaillée, le calcul du champ global du bone $B_i$, combinaison des différents champs, attracteurs ou répulsifs (étape 20-4 de la figure 10).

En ce point de l'algorithme le tableau de structures {quaternion, intensité} en contient un nombre égal à $N_{ch}$. Si m est l'index de ce tableau, le quaternion s'écrit $dQ_{(E(m))}$ et $I_{E(m)}$ est son intensité. Le but de ce bloc "Champ $B_i$" est de calculer le quaternion global $dQ_E$ et l'intensité globale $I_E$ comme une combinaison des $N_{ch}$ quaternions et intensités élémentaires $dQ_{E(m)}$ et $I_{E(m)}$.

L'index m est tout d'abord initialisé à 0 (étape 70-1).

Puis $dQ_E$ est lui aussi initialisé à $dQ_{E(o)}$ (70-2).

On définit, en outre, un coefficient k (étape 70-3). La formule donnée dans la figure 15 est un exemple possible, mais d'autres formules peuvent être utilisées.

L'étape 70-4 correspond à une interpolation sphérique de coefficient k entre les quaternions $dQ_E$ et $dQ_{E(m+1)}$ (cette interpolation est symbolisée par le signe $(^\circ_K)$). $I_E$ est ensuite calculé, selon la formule donnée en figure 15 (étape 70-5). Là encore, il s'agit là d'un exemple, et d'autres combinaisons sont possibles, On peut prendre également, par exemple, la moyenne arithmétique des $I_{Ei}$, ou bien la moyenne géométrique.

Puis, m est incrémenté (étape 70-6) et comparé à $N_{ch}$ (étape 70-7). Si $N_{ch}$ est atteint, l'algorithme s'arrête. Sinon, il reboucle au niveau de l'étape 70-3.

La figure 16 représente de manière détaillée le calcul de la vitesse et du quaternion relatifs au bonne père (étape 20-5 de la figure 10).

Dans une première étape, un coefficient I peut être calculé, qui représente l'intensité (du champ global) qui tient compte de l'inertie $k_{ii}$ du bone $B_i$.

L'étape 80-2 est une interpolation sphérique de coefficient I entre les quaternions $dQ_i$ et $dQ_E$. C'est en quelque sorte une étape de prise en compte du champ.

On calcule ensuite (étape 80-3) le champ $dQ_E$ qui tient compte de l'intensité globale $I_E$ et de l'intensité $k_{ii}$.

Est ensuite calculé (étape 80-4) $Q_V$, le quaternion "vitesse" du quaternion $dQ_i$. Une interpolation sphérique est faite entre le quaternion identité $Q_I$ et la vitesse précédente (celle à l'instant précédent n-1) $Q_V$, pour trouver la nouvelle vitesse. Le coefficient de cette interpolation est $k_{ai}$, coefficient d'amortissement du bone $B_i$.

La vitesse est multipliée (multiplication de quaternions) par le champ $dQ_E$ (étape 80-5). L'étape 80-6 correspond au calcul de la variation $dQ_i$ qui résulte de la vitesse. Puis, la variation $dQ_i$ est calculée (étape 80-7).

Quel que soit le mode de réalisation de l'invention choisi, celle-ci permet d'animer un personnage facilement et rapidement. Si on prend l'exemple du personnage représenté en figure 3, il suffit, selon l'invention, de déterminer les positions, ou le but à atteindre, de quelques pseudofeuilles telles que les mains, ou un pied, ou un oeil,...etc. Il n'est pas nécessaire de définir les mouvements de chaque point du personnage.

La technique selon l'invention permet de calculer le mouvement d'un objet à partir des champs d'influence (champs attracteurs ou champs répulsifs), qui définissent l'environnement de l'objet. Le mouvement dépend des diverses influences auxquelles sont soumis les différentes bones de l'objet. Ce procédé peut aussi être combiné avec le modèle d'animation de points d'une image, exposé au début de la présente description détaillée, en particulier en liaison avec les équations (1) à (12).

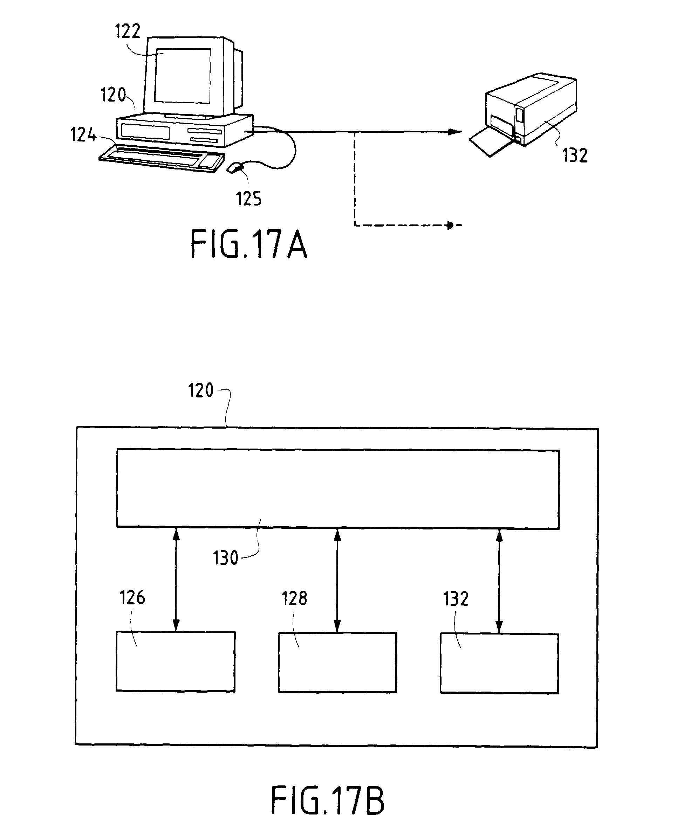

Le procédé de traitement ou d'animation d'images conforme à l'invention peut être mis en oeuvre à l'aide d'un dispositif tel que celui illustré sur les figures 17A et 17B.

La figure 17A représente globalement une station graphique comportant un micro-ordinateur 120 configuré de manière adaptée pour la génération et le traitement, selon un procédé conforme à l'invention, d'objets graphiques bidimensionnels ou tridimensionnels, un périphérique de sortie 122 et des périphériques de contrôle (clavier 124 et souris 125). Le micro-ordinateur 120 comporte une section de calcul avec toutes les composantes électroniques, logiciels ou autres, nécessaires à la génération d'images et au traitement ou à l'animation des images ainsi obtenues.

Plus précisément, le système utilise un mico-ordinateur de type PC, de puissance moyenne. Ce micro-ordinateur se compose d'une unité centrale 120 qui comporte un microprocesseur 126, une mémoire 128, un périphérique d'entrée, par exemple de type disque dur 132, couplés à un bus 130. Un périphérique de sortie, par exemple de type écran 122 ou dispositif de visualisation, est piloté par une carte vidéo permettant d'afficher des informations. Le micro-ordinateur dispose également des périphériques de contrôle, en l'occurrence le clavier 124 et la souris 125. Le langage de programmation utilisé est le langage C++ et la langage d'assemblage des microprocesseurs Pentium.

Des modèles sont enregistrés et lus à partir d'un disque dur.

Ces modèles sont visualisés sur l'écran 122 d'ordinateur par l'intermédiaire du sous-système graphique. C'est-à-dire :

- Soit en utilisant un algorithme de tracé de ligne qui écrit les points directement dans la mémoire graphique de l'ordinateur afin que ces derniers soient visualisés sur l'écran par la carte vidéo (partie hardware du sous-système graphique).
- Soit en utilisant des algorithmes de contrôle d'un logiciel de pilotage (API) d'une carte 3D (pouvant afficher des informations tridimensionelles), c'est-à-dire d'une carte spécialisée dans l'affichage, non pas de points mais de polygones ; la carte 3D se chargeant elle même, par la suite, de convertir les polygones en points affichés pour la carte vidéo.

Pour manipuler les objets, on utilise les périphériques de contrôle, par exemple le clavier 124 ou la souris 125 pour, par exemple, sélectionner et déplacer les différents "bones" ou segments d'un système articulé, les points morphiques dans l'espace 3D qui est représenté sur l'écran, les champs attractifs ou répulsifs du système articulé, etc... ou pour faire apparaître et disparaître un menu déroulant c'est-à-dire une zone d'affichage constituée de paramètres. Ces derniers peuvent ainsi être réglés par d'autres touches du clavier 124.

L'objet, à partir du logiciel (l'application), est chargé du disque dur dans la mémoire centrale de l'ordinateur et s'affiche sur l'écran. Le manipulateur utilise alors les commandes (périphériques de contrôle) pour effectuer les opérations voulues. Le programme compote par exemple les possibilités suivantes :

- initialiser l'application.
- charger un modèle décrit selon le procédé.
- afficher un modèle soit :

  - déterminer, par exemple à partir de splines, des réglages initiaux de leurs paramètres et des algorithmes du procédé (par exemple, les paramètres de la cinématique inverse), les éléments tridimensionnels (polygones).
  - transformer les éléments tridimensionnels en éléments bidimensionnels pouvant être par la suite affichés sur un écran (l'espace bidimensionnel)
  - afficher les éléments bidimensionnels ainsi générés soit en utilisant un algorithme de tracé de ligne, soit en utilisant une librairie de fonctions permettant d'utiliser des cartes hardware spécialisées dans ce domaine (cartes 3D).
  - manipuler des objets (bones, ou sections, ou points morphiques, ou champs, ou textures, ou lumières) en modifiant leurs paramètres (coordonnées de textures, position, longueur, $K_i$, $K_a$, etc...).

- quitter l'application.

Un programme, permettant de mettre en oeuvre le procédé selon l'invention est résidant ou enregistré sur un support (par exemple : disquette ou CD ROM ou disque dur amovible ou cartouche ou bande magnétique) susceptible d'être lu par un système informatique ou par le microordinateur 120. Ce programme concerne par exemple un procédé d'animation d'une image comportant une chaîne de N segments i (i = 0, 1, 2,...,N-1 ) entre un segment racine 0 et un segment d'extrémité N-1, dit pseudofeuille , chacun des segments étant défini par une orientation dans l'espace ($\alpha$, $\beta$, $\psi$), le segment pseudofeuille devant atteindre une orientation angulaire but ($\alpha_{but}$, $\beta_{but}$, $\psi_{but}$). Il comporte par exemple des instructions commandant au microordinateur de:

- définir une fonction de champ, dite champ d'image, comportant :

  - une composante attractive associée à l'orientation angulaire but et s'annulant pour cette orientation
  - et, si des contraintes angulaires sont à respecter, une composante répulsive associée à chacune de ces contraintes

- déterminer le mouvement de chaque segment selon une équation du mouvement, en fonction du champ pour l'orientation initiale de ce segment
- animer la chaîne de segments selon le mouvement ainsi déterminé.

L'affichage de la forme ou des points sur l'écran graphique 122 est fait en temps réel. Le procédé selon l'invention permet de visualiser le mouvement de l'objet en temps réel.

Ou bien, le programme concerne par exemple un procédé d'animation d'une image comportant une chaîne de N segments i (i = 0, 1, 2,...,N-1 ) entre un segment racine 0 et un segment d'extrémité N-1, dit pseudofeuille , chaque segment i étant repéré, par rapport au segment i-1, encore appelé segment père du segment i, par une transformation géométrique $dTRF_{(i)} = dTRF0_{(i)}, {}^* \delta TRF_{(i)}$.composé d'une transformation de repos $dTRF0_{(i)}$ et d'une transformation $\delta TRF_{(i)}$.traduisant le mouvement, chacune de ces transformations comportant une composante rotationelle associée $dROT_{(i)}$ , $dROT0_{(i)}$ et $\delta ROT_{(i)}$. Le programme comporte par exemple des instructions commandant au microordinateur de:

1. déterminer un but à atteindre pour la pseudofeuille
2. sélectionner la pseudofeuille en tant que segment courant
3. calculer, pour le segment courant, la rotation $\delta ROTB_{(i)}$ pour atteindre le but fixé à ce segment
4. déterminer, pour le segment père du segment courant, le but à atteindre
5. sélectionner le segment père du segment courant en tant que segment courant et réitérer l'étape 3
6. déplacer la chaîne de segments en fonction des rotations ainsi déterminées

Là encore l'affichage de la forme ou des points sur l'écran graphique 122 est fait en temps réel. Le procédé selon l'invention permet de visualiser le mouvement de l'objet en temps réel.

Ou bien le programme concerne par exemple un procédé de déplacement et/ou d'animation d'un système articulé visualisé sur une image, ce système comportant N segments i (i = 0, 1, 2,...,N-1 ) entre un segment racine i=0 et un segment d'extrémité i=N-1, dit pseudofeuille , et les segments étant reliés deux à deux entre eux par des articulations , une orientation but de la pseudofeuille étant déterminée , chaque segment i étant repéré, par rapport au segment i-1, encore appelé segment père, par un quaternion $dQ_i$, et ,par rapport à un repère absolu, par un quaternion $Q_i$, l'orientation but à atteindre étant elle même représentée, dans le repère absolu, par un quaternion $Q_B$. Le programme comporte par exemple des instructions commandant au microordinateur de:

- définir, pour chaque section i, un quaternion champ, dit champ d'image, comportant :

  - une composante attractive, associée à l'orientation but
  - et, si contraintes sont imposées, une composante répulsive associée à chacune des contraintes

- calculer, pour chaque section i, le quaternion vitesse
- déplacer chaque section du système articulé, sur l'image, en fonction de la vitesse ainsi obtenue

Là encore l'affichage de la forme ou des points sur l'écran graphique 122 est fait en temps réel. Le procédé selon l'invention permet de visualiser le mouvement de l'objet en temps réel.

Le micro-ordinateur comporte des moyens de calcul et de mémorisation des valeurs de potentiel ou de champ et/ou de $k_a$ et/ou $k_i$ des segments considérés ou sélectionnés, ainsi que de la vitesse de déplacement et des nouvelles coordonnées des points. Ces valeurs sont transmises à une unité de gestion de l'affichage.

Le micro-ordinateur 120 peut être programmé pour générer des formes à animer. Il peut être aussi programmé pour la génération ou la conception de formes assistée par ordinateur (CAO). Les données relatives à la forme, ou les points qui la définissent, en 2D ou 3D, sont stockées en mémoire, de même que les paramètres dynamiques correspondant.

Le micro-ordinateur 120 est également relié à d'autres dispositifs périphériques, tels que par exemple, des dispositifs d'impression (non représentés sur la figure). Il peut être relié à un réseau électronique de type Internet, permettant d'envoyer des données relatives aux formes générées. Selon l'invention ces données comportent d'une part des données sur les coordonnées relatives des points définissant l'objet, mais aussi des données relatives à la dynamique des points et de l'objet lui-même.

D'une manière générale les données d'images et/ou les données relatives aux points ou aux squelettes d'objets peuvent être mémorisées dans une zone mémoire du dispositif 120, de même que les paramètres dynamiques correspondants.

Comme déjà mentionné dans l'introduction, les objets de l'invention peuvent être appliqués à la réalisation cinématographique ou aux jeux vidéo, mais aussi aux procédés de conception et de pièces techniques où il est important non seulement de représenter ces pièces, mais aussi de pouvoir observer leur comportement lors de déformations simulées.

**Revendications**

**1.** Procédé d'animation d'une image comportant une chaîne de N segments i (i = 0, 1, 2,...,N-1 ) entre un segment dit pseudoracine 0 et un segment d'extrémité N-1, dit pseudofeuille , chacun des segments étant défini par une orientation dans l'espace ($\alpha$, $\beta$, $\psi$), le segment pseudofeuille devant atteindre une orientation angulaire but ($\alpha_{but}$, $\beta_{but}$, $\psi_{but}$), ce procédé comportant les étapes suivantes:

- la définition d'une fonction de champ, dite champ d'image, comportant :

  • une composante attractive associée à l'orientation angulaire but et s'annulant pour cette orientation
  • et, si des contraintes angulaires sont à respecter, une composante répulsive associée à chacune de ces contraintes

- la détermination du mouvement de chaque segment selon une équation du mouvement, en fonction du champ pour l'orientation initiale de ce segment
- l'animation de la chaîne de segments selon le mouvement ainsi déterminé.

**2.** Procédé selon la revendication 1, comportant en outre le calcul de la vitesse de déplacement de chaque segment, proportionnellement à la valeur du champ d'image pour ce segment, le segment étant déplacé en fonction de la vitesse de déplacement calculée.

**3.** Procédé selon la revendication 1, comportant en outre le calcul de la vitesse de déplacement de chaque segment, selon la formule

$$V_n = K_a V_{n-1} + K_i (E_n + E'_n)$$

où :

.  n est un entier qui représente le temps (discrétisé)
.  $V_n$ est le vecteur "vitesse" du segment
.  $E_n$ et $E'_n$ représentent respectivement, à l'instant n, les vecteurs champ attracteur et champ répulsif
.  $K_i$ et $K_a$ sont des coefficients, respectivement d'inertie et d'amortissement de chaque segment influencé par les champs E et E'

**4.** Procédé selon la revendication 3, le champ $E_n$ étant proportionnel au vecteur de composantes :

$$(\alpha_{but} - \alpha_{(n-1)}), (\beta_{but} - \beta_{(n-1)}), (\psi_{but} - \psi_{(n-1)}),$$

où $\alpha_{(n-1)}$ , $\beta_{(n-1)}$, et $\psi_{(n-1)}$ sont les composantes angulaires de l'orientation du segment considéré à l'instant n-1.

**5.** Procédé selon la revendication 3 ou 4, $K_a$ étant choisi strictement inférieur à 1.

**6.** Procédé selon la revendication 5, $K_a$ étant égal à zéro.

**7.** Procédé selon l'une des revendications 3 à 6, le champ répulsif $E'_n$ traduisant le fait que chaque grandeur $\alpha$, $\beta$ et $\psi$ ne peut varier que dans certaines limites : $\alpha \in [\alpha_{min}, \alpha_{max}]$, $\beta \in [\beta_{min}, \beta_{max}]$ et $\psi \in [\psi_{min.} \psi_{max}]$

**8.** Procédé selon l'une des revendications précédentes, au moins un des segments $i_0$ ayant une vitesse angulaire limite $v_{lim}$ qu'il ne peut pas dépasser.

**9.** Procédé selon la revendication 8, la détermination du mouvement du segment $i_0$ comportant les étapes suivantes:

- calculer la "norme" de la vitesse : $\|v_n\| = |v_{\alpha n}| + |v_{\beta n}| + |v_{\psi n}|$, et :
- Si $\|v_n\| < v_{lim}$ , déterminer la position du segment selon l'équation

$$P_{an} = P_{a(n-1)} + V_n$$

où :

. n est un entier qui représente le temps (discrétisé).
$P_{an}$ est la position angulaire à une certaine époque, et $P_{a(n-1)}$ est la position angulaire à "l'époque précédente".

- Sinon, déterminer la position du segment selon l'équation

$$P_{an} = P_{a(n-1)} + V_n . V_{lim/}\|V_n\|$$

**10.** Procédé d'animation d'une image comportant une chaîne de N segments i (i = 0, 1, 2,...,N-1 ) entre un segment racine 0 et un segment d'extrémité N-1, dit pseudofeuille , chaque segment i étant repéré, par rapport au segment i-1, encore appelé segment père du segment i, par une transformation géométrique $dTRF_{(i)} = dTRF0_{(i)}{}^* \delta TRF_{(i)}$. composé d'une transformation de repos $dTRF0_{(i)}$ et d'une transformation $\delta TRF_{(i)}$. traduisant le mouvement, cha-cune de ces transformations comportant une composante rotationelle associée $dROT_{(i)}$ , $dROT0_{(i)}$ et $\delta ROT_{(i)}$ ce procédé comportant les étapes suivantes:

1. déterminer un but à atteindre pour la pseudofeuille
2. sélectionner la pseudofeuille en tant que segment courant
3. calculer, pour le segment courant, la rotation $\delta ROTB_{(i)}$ pour atteindre le but fixé à ce segment
4. déterminer, pour le segment père du segment courant, le but à atteindre
5. sélectionner le segment père du segment courant en tant que segment courant et réitérer l'étape 3
6. déplacer la chaîne de segments en fonction des rotations ainsi déterminées

**11.** Procédé selon la revendication 10, chaque but à atteindre étant déterminé par 3 angles $\alpha_{but}$, $\beta_{but}$ et $\psi_{but}$

**12.** Procédé selon la revendication 10, ou 11, l'étape de détermination , pour le segment courant, de la rotation $\delta ROTB_{(i)}$ pour atteindre le but fixé à ce segment comportant:

- la définition d'une fonction de champ, dite champ d'image, comportant :

• une composante attractive associée à l'orientation angulaire du but fixé et s'annulant pour cette orientation
• et, si des contraintes angulaires sont à respecter, une composante répulsive associée à chacune de ces contraintes

- la détermination de la rotation $\delta ROTB_{(i)}$ selon une équation du mouvement, en fonction du champ pour l'orientation initiale de ce segment

**13.** Procédé selon la revendication 12, comportant en outre le calcul de la vitesse de déplacement de chaque segment, proportionnellement à la valeur du champ d'image pour ce segment.

**14.** Procédé selon la revendication 12, comportant en outre le calcul de la vitesse de déplacement de chaque segment, selon la formule

$$V_n = K_a\, V_{n-1} + K_i\, (E_n + E'_n)$$

où :

- . n est un entier qui représente le temps (discrétisé)
- . $V_n$ est le vecteur "vitesse" de la particule
- . En et $E'_n$ représentent respectivement, à l'instant n, les vecteurs champ attracteur et champ répulsif
- . $K_i$ et $K_a$ sont des coefficients, respectivement d'inertie et d'amortissement de chaque segment influencé par les champs E et E'

**15.** Procédé selon la revendication 14, le champ $E_n$ étant proportionnel au vecteur de composantes :

$$(\alpha_{but} - \alpha_{(n-1)}),\ (\beta_{but} - \beta_{(n-1)}),\ (\psi_{but} - \psi_{(n-1)}),$$

où $\alpha_{(n-1)}$ , $\beta_{(n-1)}$, et $\psi_{(n-1)}$ sont les composantes angulaires de l'orientation du segment considéré à l'instant n-1.

**16.** Procédé selon la revendication 14 ou 15, $K_a$ étant choisi strictement inférieur à 1.

**17.** Procédé selon la revendication 16, $K_a$ étant égal à zéro.

**18.** Procédé selon l'une des revendications 10 à 17, comportant en outre une étape de calcul, pour chaque segment, de la rotation supplémentaire à effectuer pour que la pseudofeuille atteigne un point spatial déterminé.

**19.** Procédé selon l'une des revendications 10 à 18, comportant en outre une étape de calcul, pour chaque segment, de la rotation supplémentaire à effectuer pour que tous les segments soient attirés ou déplacés selon une direction commune.

**20.** Procédé selon l'une des revendications 10 à 19, le but et la rotation de chaque segment étant calculés selon un ordre linéaire remontant, du segment N-1 au segment 0, le but à atteindre du segment i ne dépendant que du but à atteindre du segment i+1.

**21.** Procédé selon l'une des revendications 10 à 19, le but et la rotation de chaque segment i étant calculés de manière absolue.

**22.** Procédé de déplacement et/ou d'animation d'un système articulé visualisé sur une image, ce système comportant N segments i (i = 0, 1, 2,...,N-1 ) entre un segment racine i=0 et un segment d'extrémité i=N-1, dit pseudofeuille , et les segments étant reliés deux à deux entre eux par des articulations , une orientation but de la pseudofeuille étant déterminée , chaque segment i étant repéré, par rapport au segment i-1, encore appelé segment père, par un quaternion $dQ_i$, et ,par rapport à un repère absolu, par un quaternion $Q_i$, l'orientation but à atteindre étant elle même représentée, dans le repère absolu, par un quaternion $Q_B$, ce procédé comportant :

- pour chaque section i, définir un quaternion champ, dit champ d'image, comportant :

  • une composante attractive, associée à l'orientation but
  • et, si contraintes sont imposées, une composante répulsive associée à chacune des contraintes

- pour chaque section i, calculer le quaternion vitesse

- déplacer chaque section du système articulé, sur l'image, en fonction de la vitesse ainsi obtenue

23. Procédé selon la revendication 22, le calcul du quaternion vitesse à un instant n étant réalisé par interpolation sphérique entre le quaternion identité et la vitesse à l'instant n-1.

24. Procédé selon l'une des revendications 22 ou 23, comportant en outre une étape de détermination du quaternion $dQ_i$ pour chaque segment i

25. Procédé selon l'une des revendications 22 à 24,. Le quaternion $V_n$ étant donné par la formule:

$$V_n = Q_{En}.[Q_I(^{\circ}{}_{Ka})V_{(n-1)}]$$

où :

- n est un entier qui représente le temps (discrétisé), $Q_{in}$ étant le quaternion $Q_i$. à l'instant n
- $V_n$ est le quaternion "vitesse" du segment i, à l'instant n
- $Q_{En}$ représente, à l'instant n, le quaternion champ, comportant les composantes attractives et, éventuellement, répulsives
- le symbole $^{\circ}{}_{Ka}$ représentant l'interpolation sphérique de coefficient $K_a$ , coefficient d'amortissement de chaque segment influencé par les champs E et E'

26. Procédé selon l'une des revendications 22 à 25, chacun des champs attracteurs de chaque section étant calculé sous forme d'un quaternion attracteur élémentaire et d'une intensité élémentaire, et l'ensemble des champs attracteurs élémentaires étant ensuite combinés pour obtenir un champ attracteur global sous la forme d'un quaternion attracteur global et d'une intensité globale

27. Procédé selon la revendication 26, le quaternion attracteur global étant obtenu par interpolation sphérique entre les différents quaternions élémentaires

28. Procédé selon la revendication 26 ou 27, l'intensité globale étant une combinaison linéaire des intensités élémentaires.

29. Procédé selon l'une des revendications 22 à 28, les champs attracteurs étant du type champ spatial ou champ directionnel ou champ rotationnel ou une combinaison de deux ou trois champs de ces différents types

30. Procédé selon la revendication 30, un champ directionnel étant défini par un vecteur et une intensité

31. Procédé selon la revendication 30 ou 31, un champ spatial étant défini par une intensité et par un vecteur dont les trois coordonnées sont celles d'un point dans l'espace 3D.

32. Procédé selon l'une des revendications 30 à 32, un champ rotationnel étant défini par un quaternion et une intensité.

33. Procédé selon l'une des revendications 30 à 33, comportant en outre, pour chaque champ élémentaire, une étape de calcul de la variation δQi à appliquer au quaternion $dQ_i$ pour que la pseudofeuille atteigne son but.

34. Dispositif pour animer une image comportant une chaîne de N segments i (i = 0, 1, 2,...,N-1 ) entre un segment racine 0 et un segment d'extrémité N-1, dit pseudofeuille , chacun des segments étant défini par une orientation dans l'espace (α, β, ψ), le segment pseudofeuille devant atteindre une orientation angulaire but ($\alpha_{but}$, $\beta_{but}$, $\psi_{but}$), ce dispositif comportant :

- des moyens pour définir une fonction de champ, dite champ d'image, comportant :

  • une composante attractive associée à l'orientation angulaire but et s'annulant pour cette orientation
  • et, si des contraintes angulaires sont à respecter, une composante répulsive associée à chacune de ces contraintes

- des moyens pour déterminer le mouvement de chaque segment selon une équation du mouvement, en fonction du champ pour l'orientation initiale de ce segment

- des moyens pour l'animation de la chaîne de segments selon le mouvement ainsi déterminé.

**35.** Dispositif pour animer une image comportant une chaîne de N segments i (i = 0, 1, 2,...,N-1 ) entre un segment racine 0 et un segment d'extrémité N-1, dit pseudofeuille , chaque segment i étant repéré, par rapport au segment i-1, encore appelé segment père du segment i, par une transformation géométrique $dTRF_{(i)} = dTRF0_{(i)}$,* $\delta TRF_{(i)}$. composé d'une transformation de repos $dTRF0_{(i)}$ et d'une transformation $\delta TRF_{(i)}$.traduisant le mouvement, chacune de ces transformations comportant une composante rotationelle associée $dROT_{(i)}$ , $dROT0_{(i)}$ et $\delta ROT_{(i)}$ ce dispositif comportant des moyens pour:

1. déterminer un but à atteindre pour la pseudofeuille
2. sélectionner la pseudofeuille en tant que segment courant
3. calculer, pour le segment courant, la rotation $\delta ROTB_{(i)}$ pour atteindre le but fixé à ce segment
4. déterminer, pour le segment père du segment courant, le but à atteindre
5. sélectionner le segment père du segment courant en tant que segment courant et réitérer l'étape 3
6. déplacer la chaîne de segments en fonction des rotations ainsi déterminées.

**36.** Dispositif pour déplacer et/ou d'animer un système articulé visualisé sur une image, ce système comportant N segments i (i = 0, 1, 2,...,N-1 ) entre un segment racine i=0 et un segment d'extrémité i=N-1, dit pseudofeuille , et les segments étant reliés deux à deux entre eux par des articulations , une orientation but de la pseudofeuille étant déterminée , chaque segment i étant repéré, par rapport au segment i-1, encore appelé segment père, par un quaternion $dQ_i$, et ,par rapport à un repère absolu, par un quaternion $Q_i$, l'orientation but à atteindre étant elle même représentée, dans le repère absolu, par un quaternion $Q_B$, ce dispositif comportant :

- des moyens pour définir, pour chaque section i, un quaternion champ, dit champ d'image, comportant :

  • une composante attractive, associée à l'orientation but
  • et, si contraintes sont imposées, une composante répulsive associée à chacune des contraintes

- des moyens pour calculer, pour chaque section i, le quaternion vitesse
- des moyens pour déplacer chaque section du système articulé, sur l'image, en fonction de la vitesse ainsi obtenue.

**37.** Dispositif selon la revendication 35, comportant en outre des moyens pour modifier la fonction de champ et/ou l'équation du mouvement

**38.** Dispositif selon la revendication 36, comportant en outre des moyens pour modifier le calcul de la rotation et/ou la détermination du but à atteindre.

**39.** Dispositif selon la revendication 37, comportant en outre des moyens pour modifier le quaternion champ et/ou le calcul du quaternion vitesse

**40.** Dispositif selon l'une des revendications 38 à 40, les moyens pour modifier la fonction de champ et/ou l'équation du mouvement , ou le calcul de la rotation et/ou la détermination du but à atteindre, ou le quaternion champ et/ou le calcul du quaternion vitesse, permettant de les modifier en temps réel.

FIG.1

FIG.2

FIG.3

FIG.4

FIG.5

0   1 ..... N-1 N

## FIG.6A

0   1 ..... N-1 N

## FIG.6B

14

16

## FIG.7

$Z$ $Y$ $X$

$B_{i-1}$

$Y$

$Z$ $X$

$d^2A_0$

$d^2\Psi_{MAX}$

$B_i$

$d^2\Psi_0 = (d^2\Psi_{MIN} + d^2\Psi_{MAX})/2$

$d^2\Psi$

$d^2\Psi_{MIN}$

FIG.8

$Z$ $Y$ $X$

$B_{i-1}$

$Y$

$Z$ $X$

$d^2A_0$'

$d^2A_0$

$\gamma$

$B_i$

FIG.9

## FIG.10

Début

i=N-1 — 20.1

N$_{ch}$ — 20.2

OUI ⟨N$_{ch}$=0?⟩ — 20.36

ChampBi — 20.4

DynamiqueBi — 20.5

i=i-1 — 20.6

NON ⟨i<0 ?⟩ — 20.7

22

Fin

## FIG.11

Fi=AttractorBi

j=0 — 30.1

pQ=pQo — 30.2

N$_{ch}$=0 — 30.3

20.2

⟨E(j) existe ?⟩ NON — 30.4

⟨Type de E(j) ?⟩ — 30.5

δQrotationnel | δQdirectionnel | δQspatial

30.61    30.62    30.63

N$_{ch}$=N$_{ch}$+1 — 30.7

pQ=pQ+1 — 30.8

j=j+1 — 30.9

NON ⟨j=Nchamps ?⟩ — 3.10

Fin

EP 1 028 394 A1

32

FIG.13

30.62

δQdirectionnel

Transformer $A_E$ et $D_E$ en le vecteur $V_E$ — 50.1

$V_E = [Q_i]^{-1} \cdot V_E$ — 50.2

$Q = A_i \otimes V_E$ — 50.3

$Q = dQ_i \cdot Q$ — 50.4

$\delta Q_E = [dQ_0]^{-1} \cdot Q$ — 50.5

Stoker $\delta Q_E$ ainsi que $l_E$ dans le tableau pointé par pQ — 50.6

Fin

FIG.12

30.61

δQrotationnel

$Q = Q_E \cdot [Q_{(N-1)}]^{-1} \cdot Q_i$ — 40.1

Bi a un père ? / NON — 40.2

$Q = Q_{(i-1)} \cdot Q$ — 40.3

$\delta Q_E = [dQ_0]^{-1} \cdot Q$ — 40.4

Stoker $\delta Q_E$ ainsi que $l_E$ dans le tableau pointé par pQ — 40.5

Fin

60.63

$\delta Q$spatial

$E_F = Q_{(N-1)} \cdot A_{(N-1)}$

60.1

$V_A = T_{(N-1)} - T_i + E_F$

60.2

$V_A = [Q_i]^{-1} \cdot V_A$

60.3

$V_B = V_E - T_i$

60.4

$V_B = [Q_i]^{-1} \cdot V_B$

60.5

$Q = V_A \otimes V_B$

60.6

$Q = dQ_i \cdot Q$

60.7

$\delta Q_{Ei} = [dQo]^{-1} \cdot Q$

60.8

Stoker $\delta Q_E$ ainsi que $l_E$ dans le tableau pointé par pQ

60.9

Fin

FIG.14

FIG.16

FIG.15

FIG.17A

FIG.17B

| | Office européen des brevets | RAPPORT DE RECHERCHE EUROPEENNE | Numéro de la demande EP 99 40 0342 |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | MATARIC E.A.: "MOVEMENT CONTROL METHODS FOR COMPLEX, DYNAMICALLY SIMULATED AGENTS: ADONIS DANCES THE MACARENA" PROCEEDINGS OF THE SECOND INTERNATIONAL CONFERENCE ON AUTONOMOUS AGENTS, 9 - 13 mai 1998, pages 317-324, XP002104910 NEW YORK NY USA * page 319, colonne de droite, ligne 32 - page 320, colonne de gauche, ligne 43 * --- | 1-40 | G06T15/70 |
| A | WO 97 40471 A (KATRIX INC) 30 octobre 1997 * page 5, ligne 37 - page 6, ligne 25 * * page 15, ligne 1 - ligne 17 * * page 27, ligne 4 - ligne 9; figure 8 * --- | 1,2,8, 10-13, 20-22, 30,34-37 | |
| A | EP 0 827 115 A (MICROSOFT CORP) 4 mars 1998 * colonne 1, ligne 23 - ligne 34 * --- | 1,2,8, 10-13, 20-22, 30,34-37 | DOMAINES TECHNIQUES RECHERCHES (Int.Cl.6) G06T |
| A | BOULIC R ET AL: "COMPLEX CHARACTER POSITIONING BASED ON A COMPATIBLE FLOW MODEL OF MULTIPLE SUPPORTS" IEEE TRANSACTIONS ON VISUALIZATION AND COMPUTER GRAPHICS, vol. 3, no. 3, 1 juillet 1997, pages 245-261, XP000702052 * le document en entier * --- -/-- | 1,2,8, 10-13, 20-22, 30,34-37 | |

Le présent rapport a été établi pour toutes les revendications

| Lieu de la recherche BERLIN | Date d'achèvement de la recherche 10 juin 1999 | Examinateur Burgaud, C |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

### Office européen des brevets

## RAPPORT DE RECHERCHE EUROPEENNE

Numéro de la demande

EP 99 40 0342

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 520 099 A (SHUKYOHOJIN KONGO ZEN SOHONZAN) 30 décembre 1992<br><br>* colonne 3, ligne 51 - colonne 5, ligne 30 *<br><br>----- | 1,2,8, 10-13, 20-22, 30,34-37 | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| BERLIN | 10 juin 1999 | Burgaud, C |

CATEGORIE DES DOCUMENTS CITES

X : particulièrement pertinent à lui seul
Y : particulierement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**     EP 99 40 0342

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-06-1999

| Document brevet cité au rapport de recherche | | Date de publication | Membre(s) de la famille de brevet(s) | | Date de publication |
|---|---|---|---|---|---|
| WO 9740471 | A | 30-10-1997 | AUCUN | | |
| EP 0827115 | A | 04-03-1998 | US | 5889532 A | 30-03-1999 |
| | | | AU | 3245097 A | 12-02-1998 |
| | | | CA | 2211858 A | 02-02-1998 |
| | | | JP | 10261108 A | 29-09-1998 |
| EP 0520099 | A | 30-12-1992 | JP | 4270372 A | 25-09-1992 |
| | | | JP | 7313648 A | 05-12-1995 |
| | | | JP | 4270470 A | 25-09-1992 |
| | | | JP | 4271734 A | 28-09-1992 |
| | | | JP | 5084679 A | 06-04-1993 |
| | | | JP | 5204430 A | 13-08-1993 |
| | | | CA | 2043885 A | 26-06-1992 |
| | | | US | 5625577 A | 29-04-1997 |
| | | | CA | 2043884 A | 26-06-1992 |
| | | | CA | 2043902 A | 26-06-1992 |
| | | | US | 5623428 A | 22-04-1997 |
| | | | CA | 2043886 A | 26-06-1992 |
| | | | CA | 2043887 A | 26-06-1992 |
| | | | US | 5586224 A | 17-12-1996 |
| | | | CA | 2043888 A | 26-06-1992 |

Pour tout renseignement concernant cette annexe : voir Journal Officiel de l'Office européen des brevets, No.12/82